# EUROPEAN PATENT APPLICATION

(11) **EP 4 687 022 A1**
(43) Date of publication of application: **04.02.2026**
(21) Application number: 24192031.3
(22) Date of filing: 31.07.2024
(51) Int. Cl.: G06F 3/14

(54) **MASTER DISPLAY, SLAVE DISPLAY, LARGE SCREEN DISPLAY, AND METHOD FOR DETECTING POSITION DATA OF DISPLAYS OF LARGE SCREEN DISPLAY**

(71) Applicant: Optoma Europe Ltd., Hemel Hempstead HP1 2UJ (GB)
(72) Inventor: MacLeod, Scott, Hemel Hempstead, HP1 2UJ (GB)
(74) Representative: Ter Meer Steinmeister & Partner

(57) **Abstract**

A master display (100) for a large screen display (400) comprising a controller (110), a transceiver (120) assigned to at least one edge(s) of the master display (100), wherein the controller (110) is configured: to transmit an activating message to all slave displays (200) being communicatively coupled to the master display (100) to activate a detection mode, to detect the adjacent slave displays (200) of the master display (100) by using its transceiver (120), to transmit a first pulse signal to at least one adjacent slave display(s) (200) of the master display (100) via its transceiver (120) based on predefined order of the edges of the master display (100); to receive contact data from at least one slave display(s) (200), to assign a unique identifier to the at least one slave display(s) (200); to receive a second pulse signal at its transceiver (120), the second pulse signal being different than the first pulse signal, and to generate position data of all slave display(s) (200) based on the unique identifiers of the slave display(s) (200) and to finish the detection mode.

## Description

### TECHNICAL FIELD

The present disclosure relates to a master display for a large screen display. Further, it relates to a slave display for a large screen display. The present disclosure also relates to a large screen display and a method for detecting position data of displays of a large screen display.

### TECHNICAL BACKGROUND

A large screen display is commonly used e.g. in showrooms, sale rooms or stands. A large screen display includes multiple displays combined to form a single large display. Each display displays a smaller piece of an overall image or each display displays the same image. In other words, the large screen display is formed of a matrix of the multiple displays arranged in lines and columns, such that the large screen display can display the overall image. In conventional large screen displays, one of the multiple displays is designated as a master display which controls the other displays, in particular slave displays, of the large screen display. A location of each display in the multi-display arrangement, i.e. matrix, needs to be known such that each display can be configured to appropriately display a correct image. The only way to configure the arrangement of the multiple displays, in particular the slave displays, in the multi-display arrangement is the uses of a control interface of the master display to provide a user with a means for programming the locations of each slave display. The manual programming of the locations of the master display and each one of the slave displays by the user is time-consuming and unpractical, because a replacement, a rearrangement of separating displays of the multi-display arrangement leads to a lot of manual working steps or any programming requires specific knowledge how to program or set the locations of the single slave displays. In the technical field of conventional large display screens, automatic methods/automatic configurations for configuring the arrangement of the multiple displays are known but these automatic methods are only usable for small arrangements of the multiple displays, i.e. at most 3x3 arrangements of the multiple displays.

The information disclosed in this background section is only for enhancement of understanding of the background of the described technology and therefore it may contain information that does not form prior art already known to a skilled person. Further, the information disclosed in the background section does not mean that one or more problems to be resolved by one or more embodiments of the disclosure was acknowledged by a skilled person.

### SUMMARY OF THE DISCLOSURE

An object of the present disclosure is to provide at least one of a large screen display, a master display, a first slave display, and a second slave display allowing an automatic configuration of the large screen display/automatic identification of the locations of the master display and each one of the slave displays leading to a reduction of the time-consumption for a configuration of a multi-display arrangement and leading to an increased practicality of the multi-display arrangement. Furthermore, it is object to provide an automatic identification of the locations of the master display and each one of the slave displays being usable for big arrangements of the multiple displays, i.e. more than 3x3, for example 4x4 arrangements of the multiple displays.

This object is solved by the features of the independent claims. Preferred embodiments are given in the dependent claims.

In one aspect of the disclosure, a master display for a large screen display is provided. The master display comprises a controller and a transceiver system communicatively coupled with the controller. The controller is configured to transmit an activating message to all slave displays being communicatively coupled to the master display to activate a detection mode, to determine at least one adjacent slave display(s) of the master display by using the transceiver system, to initiate a transmission of a first pulse signal to the at least one adjacent slave display(s) of the master display by using the transceiver system based on predefined order of edges of the master display; to receive contact data from the at least one slave display(s), to assign a unique identifier to the at least one slave display(s); to initiate a receipt of a second pulse signal by using the transceiver system, the second pulse signal being different than the first pulse signal; to generate position data of all the slave display(s) based on the unique identifiers of the slave display(s); and to finish the detection mode.

The master display may be any display, in particular the only display, of the large screen display being configured for controlling at least one, in particular a plurality of, slave display(s) but is not limited thereto. The master display may be set by the user of the large screen display but is not limited thereto.

The master display may be directly or indirectly communicatively coupled to the at least one slave display(s) by wire manner (e.g. via Ethernet) and/or wireless manner (e.g. via Wi-Fi). In wire manner, for example, the master display and the at least one slave display(s) may be communicatively coupled one by one in a serial daisy chain with HDMI cables or USB cables, or each of the at least one slave display(s) is respectively connected to the master display. In wireless manner, for example, the master display and the at least one slave display(s) may be communicatively coupled by one or more different communication channels. For instance, the master display communicates with each one of the at least one slave display(s) by using a separate communication channel but is not limited thereto.

The master display may be configured for providing control data associated with control signals to the at least one slave display(s). The control data may represent any data for controlling, e.g. turn on or turn off, the slave display but is not limited thereto.

Further, the master display may be configured for providing power to at least one, some or all of the slave displays.

The master display may comprise a controller and a transceiver system but is not limited thereto.

Additionally, the master display may be configured for providing image data, in particular unprocessed image data with the position data, or image data processed by the master display, to the at least one slave display(s). Therefore, the master display may include a display element, an image data receiving component and/or an image data providing component and a user input component.

The image data receiving component of the master display may represent any component being configured for receiving image data from an external host. The image data receiving component may be arranged in the master display but is not limited thereto. The image data receiving component may be integrated into the controller or may be a separate component. In this context, the image data may represent any image data being provided to the master display and/or being received by the master display from at least one device being external to the master display and external to the large screen display. In other words, the image data may be any data being not processed or affected by the master display and/or by any other display of the large screen display. The at least one device respective host being external to the master display and external to the large screen display may be a video stream source but is not limited thereto. The at least one device respective host being external to the master display and external to the large screen display and the image data receiving component of the master display may be directly or indirectly by wire or wireless communicatively coupled to each other. The image data may be any data, e.g. still image data or moving or video image data.

The display element of the master display may represent any element, device or component being configured for displaying an image according to the processed image data processed by the master display, in particular the controller of the master display. The display element may be arranged at the front of the master display and may extend over the entire surface of the front of the master display but is not limited thereto. The display element may be a LED panel, a OLED panel.

The image data providing component of the master display may represent any component being configured for providing and respectively transmitting the image data received by the image data receiving component of the master display or the processed image data processed by the controller of the master display to the at least one slave display(s). The image data providing component and the at least one slave display, in particular the image data receiving component of the slave display, may be directly or indirectly communicatively coupled by wire or wireless to each other. The image data providing component may be further configured for providing the image data, i.e. the received or the processed image data, with position data determined/provided by the controller of the master display to the at least one slave display. Preferably, the image data providing component may be further configured for providing the image data, i.e. the received image data, with position data determined/provided by the controller of the master display to the at least one slave display(s).

The master display comprises a front side, a back side and four edges/sidewalls (top, bottom, left, right) but are not limited thereto. The master display may comprise a data memory for storing determined/provided position data of the master display and/or the at least one slave display.

The master display may further comprise a master display control interface. A user can operate the master display, e.g. can turn on, turn off, through the master display control interface. Ther master display control interface may be directly or indirectly by wire or wireless communicatively coupled to the controller of the master display.

The master display may further comprise a user input component. The user input component may be a touch panel, a keyboard or a mouse. The master display control interface is configured to receive an operation of a user through the user input component.

A user can provide respectively unput further information to the master display, in particular the controller of the master display. For instance, the user may provide information with respect to the shape or form of the large screen display. In other words, by using the user input component, the user can e.g. provide the information to the controller of the master display that the large screen display has a L-shape or a 4x4 matrix shape but is not limited thereto.

The controller of the master display may represent any component configured for controlling the master display and for processing the data received by the master display. The controller may comprise an activating message component, a contact determination component, a first pulse signal transmission initiation component, a contact data receiving component, a unique identifier providing component, a storing component, a second pulse signal receipt initiating component, and a position data determination component, but is not limited thereto. Additionally, the controller may comprise an image data processing component. Further, the controller may comprise a unique identifier transmitting component. The activating message component, the contact determination component, the first pulse signal transmission initiation component, the contact data receiving component, the unique identifier providing component, the storing component, the second pulse signal receipt initiating component, the position data determination component, the image data processing component and/or the unique identifier transmitting component may be directly or indirectly by wire or wireless communicatively coupled to each other.

The activating message component may represent any component being configured for providing, in particular generation, creating or requesting from an external device or host (device or host being external to the controller and to the master display), at least one activating message(s) and for transmitting the at least one activating message(s) to all slave displays being communicatively coupled, i.e. directly or indirectly by wire or wireless, to the master display. The activating message component may be a single component being able to execute all of these actions or may include a plurality of sub-components, wherein each one of the sub-components is configured for executing another of these actions. The activating message component may be arranged within the controller or within the master display and is directly or indirectly by wire or wireless communicatively coupled to the controller. The transmission of the activating message from the master display to all slave displays being communicatively coupled to the master display may be provided by using a communication channel, in particular a WiFi, a HDMI cable or USB cable. The activation message may be a broadcast message but is not limited thereto.

The activating message may represent any message or instruction leading to an activation of a detection mode respectively initiating the master display and/or all slave display(s) which received the activating message to activate/switching to a detection mode. The activating message may comprise a string and/or an integer but is not limited thereto.

The detection mode may represent any mode in which the master display is prepared for executing the detection respectively generation of position data and all of the slave displays are prepared for receiving a first pulse signal.

The contact determination component may represent any component being configured for receiving or retrieving contact information from the transceiver system, for determining the adjacent slave displays of the master display, and for providing contact data of the master display. The contact determination component may be a single component being able to execute all of these actions or may include a plurality of sub-components, wherein each one of the sub-components is configured for executing another of these actions. The contact determination component may be arranged within the controller or within the master display and is directly or indirectly by wire or wireless communicatively coupled to the controller. In other words, the contact determination component determines based on contact information received from the transceiver system which edges of the master display are in contact, in particular in direct contact, with an adjacent slave display. The result of this determination represents the contact data, in particular at least a part of the contact data, of the master display.

The contact information may represent any information respectively data indicating which edges of the master display are in contact, in particular in direct contact, with an adjacent slave display. The contact information may be a sum or a sequence in a predefined order of contact indications, wherein each contact indication indicates if a specific edge of the master display is in contact, in particular direct contact, with an adjacent slave display. For instance, the contact indication may include a string and/or an integer but is not limited thereto. In a preferred embodiment, the contact indication may be a 1-bit number but is not limited thereto. Exemplary, when the transceiver system or one transceiver detects a contact to an adjacent slave display at an specific edge of the master display, the contact indication is set to "1". If there is no contact detected, the contact indication is set to "0". Each of the contact indications is provided by the transceiver system, i.e. by each one of the transceivers, to the contact determination component. Since, the master display may comprise four edges and the contact information may represent a sum or a sequence in a predefined order of all, i.e. the four, contact indications, the contact information may be a 4-bit number but is not limited thereto. The predefined order of the contact information may be [contact indication from top edge, contact indication from bottom edge, contact indication from left edge, contact indication from right edge] but is not limited thereto. For instance, when the transceiver system identifies that a contact of the master display to slave displays exists at the top, bottom and right edge, the resulting contact information may be "1101".

The contact data of the master display may represent any data indicating which edges/sidewalls of the master display are in contact, in particular in direct contact, with an adjacent slave display. The contact data may comprise a string number or an integer number but is not limited thereto. Additionally, beside the contact information, the contact data may further comprise detection information.

The detection information may represent any information respectively data indicating at which edge of the master display a first pulse signal was initially received. Since the master display may be the first component respectively starting component, the master display does not initially receive a first pulse signal. Therefore, the detection information of the master may be set to a 4-bit number "0000".

Since, the contact data may be a combination of the contact information and the detection information, the contact data may be an 8-bit number. For instance, according to the above described examples, the contact data being a combination of the contact information and the detection information may be "0000 1101".

The first pulse signal transmission initiation component may represent in a first alternative any component being configured for providing, respectively generating or creating, and transmitting, in particular forwarding, the first pulse signal to the at least one adjacent slave display(s) of the master display via the transceiver system. In this first alternative, the first pulse signal transmission initiation component may be a single component being able to execute all of these actions or may include a plurality of sub-components, wherein each one of the sub-components is configured for executing another one of these actions. For instance, the first pulse signal transmission initiation component may comprise a first pulse signal generating component configured for generating a first pulse signal and a first pulse signal transmitting component configured for transmitting the generated first pulse signal to the transceiver system but is not limited thereto. In a second alternative, the first pulse signal transmission initiation component may represent any component being configured for providing, respectively generating or creating, and transmitting/sending a first pulse signal instruction to the transceiver system for initiating a providing and a transmitting of the first pulse signal to the at least one adjacent slave display(s) of the master display by the transceiver system. In this second alternative, the first pulse signal transmission initiation component may be a single component being able to execute all of these actions or may include a plurality of sub-components, wherein each one of the sub-components is configured for executing another one of these actions. For instance, the first pulse signal transmission initiation component may comprise a first pulse signal instruction generating component configured for generating a first pulse signal instruction and a first pulse signal instruction transmitting component configured for transmitting the generated first pulse signal instruction to the transceiver system but is not limited thereto.

The first pulse signal instruction may represent any instruction, message or request leading to respectively initiating a generation of a first pulse signal in/by the transceiver system. The first pulse signal instruction may include at least one string and/or an integer but is not limited thereto. The first pulse signal transmission initiation component may be arranged within the controller or within the master display and being communicatively coupled directly or indirectly by wire or wireless to the controller.

The first pulse signal may represent any pulse or signal being transmitted from the master display to a slave display, from a slave display to a master display or from a slave display to another slave display for triggering the display who has received the first pulse to determine the adjacent slave displays, to transmit contact data to another display, and to initiate a transmission of a first pulse signal to at least one adjacent display(s) based on predefined order of the edges of the display. The first pulse signal may be a single pulse but is not limited thereto. The first pulse may be generated by a pulse generation component. The first pulse signal may be different to the second pulse signal. For instance, the first pulse signal may be a mechanical, optical, electronic magnetic, sonic or radio frequency pulse but is not limited thereto.
The predefined order of the edges of the displays, in particular the master display and or the slave display, may represent the order of edges of the displays at which the first pulse signal may be outputted/transmitted by the transceiver to another display. For instance, the predefined order may be a specific order of edges being preset by a user of the large screen display, in particular via the user input component of the master display. Exemplary, the order may be: top edge first, bottom edge second, left edge third and right edge last, but is not limited thereto. The predefined order of the edges set for the master display may be identical to the predefined order of edges set for the at least one slave display(s). The predefined order can be fix or dynamic.

The contact data receiving component may represent any component being configured for receiving contact data from at least one slave display(s) of the large screen display. The contact data receiving component may be arranged within the controller or within the master display and being communicatively coupled directly or indirectly by wire or wireless to the controller. The contact data receiving component may be indirectly or directly communicatively coupled by wire or wireless to the slave display, in particular to a contact data transmitting component, of the slave display. The contact data received from the at least one slave display(s) may be identical, i.e. are made by the same logic, to the contact data of the master display.

The unique identifier providing component may represent any component being configured for providing a unique identifier based on the received contact data from at least one slave display(s) and/or the master display. The unique identifier providing component may be arranged within the controller or within the master display and being communicatively coupled directly or indirectly by wire or wireless to the controller. The unique identifier represents any unique ID identifying one specific display, in particular slave display or master display. The unique identifier may comprise at least one integer and/or strings but is not limited thereto. The providing respectively generating of the unique identifier may be provided by replacing or exchanging the detection information of the received contact data with an existence information indicating how often the contact information of the contact data were already received by the master display, in particular by the contact data receiving component and/or controller. The existence information may include at least one integer and/or string but is not limited thereto. The existence information may be provided following a specific sequence but is not limited thereto. For instance, when the received contact data are 0100 0111 and have been received for the first time, the unique identifier providing component provides/sets the unique identifier of 0000 0111. For instance, when the received contact data are 0100 0111 and have been received for the second time, the unique identifier providing component provides/sets the unique identifier of 0001 0111. For instance, when the received contact data are 0100 0111 and have been received for the third time, the unique identifier providing component provides the unique identifier of 0010 0111. For instance, when the received contact data are 0100 0111 and have been received for the fourth time, the unique identifier providing component provides/sets the unique identifier of 010 0111. For instance, when the received contact data are 0100 0111 and have been received for the fifth time, the unique identifier providing component provides/sets the unique identifier of 1000 0111.

The storing component of the controller of the master display may represent any component being configured for storing, i.e. permanently or temporarily storing, the contact data and/or the unique identifier. The storing component may be a memory but is not limited thereto. The storing component may be arranged within the controller or within the master display and being communicatively coupled directly or indirectly by wire or wireless to the controller.

The second pulse signal receipt initiating component of the controller of the master display may represent, in a first alternative, any component being configured for receiving the second pulse signal via the transceiver system. In other words, the transceiver system receives the second pulse signal and forwards the second pulse signal without any processing to the second pulse signal receipt initiating component. The second pulse signal receipt initiating component may represent, in a second alternative, any component being configured for receiving second pulse signal information from the transceiver system indicating a receipt of a second pulse signal. In other words, the transceiver system receives the second pulse signal, provides second pulse signal information, and transmits the provided second pulse signal information to the second pulse signal receipt initiating component.

The second pulse signal information may represent any information, message or data indicating that the transceiver has received a second pulse signal. The second pulse signal information may comprise at least one integer and/or string.

The second pulse signal receipt initiating component may be arranged within the controller or within the master display and being communicatively coupled directly or indirectly by wire or wireless to the controller. The second pulse signal receipt initiation component may be a single component being able to execute all of these actions or may include a plurality of sub-components, wherein each one of the sub-components is configured for executing another one of these actions. Additionally, the second pulse signal receipt initiation component of the controller of the master display may be configured for receiving a complete message from each slave display which provides and transmits a second pulse signal. The complete message indicates that the slave display which has provided and transmitted the second pulse is fully detected.

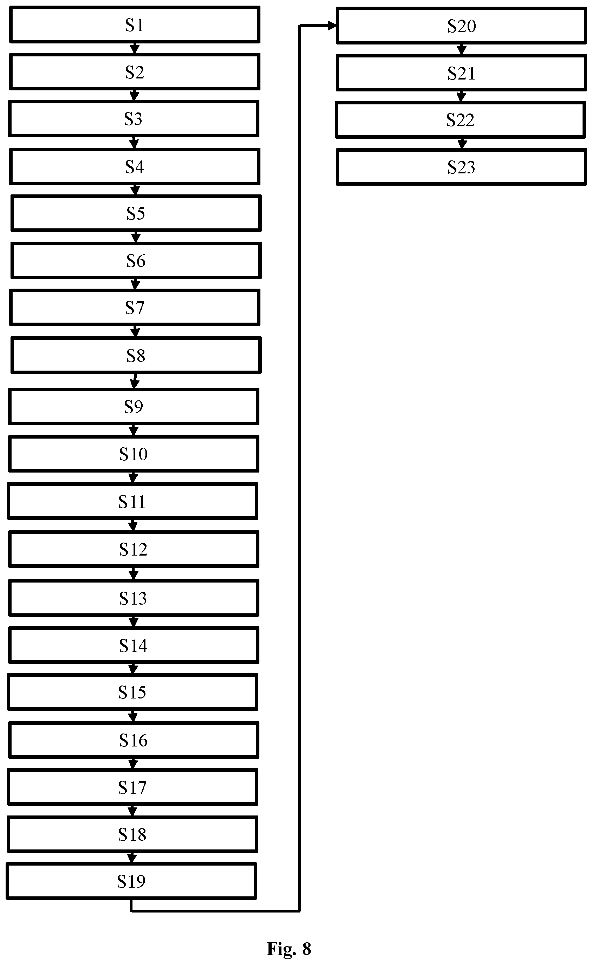

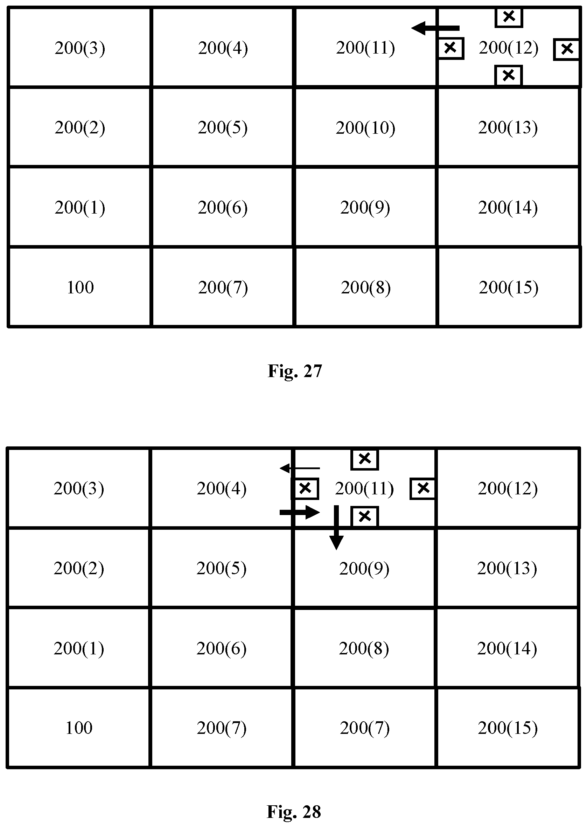

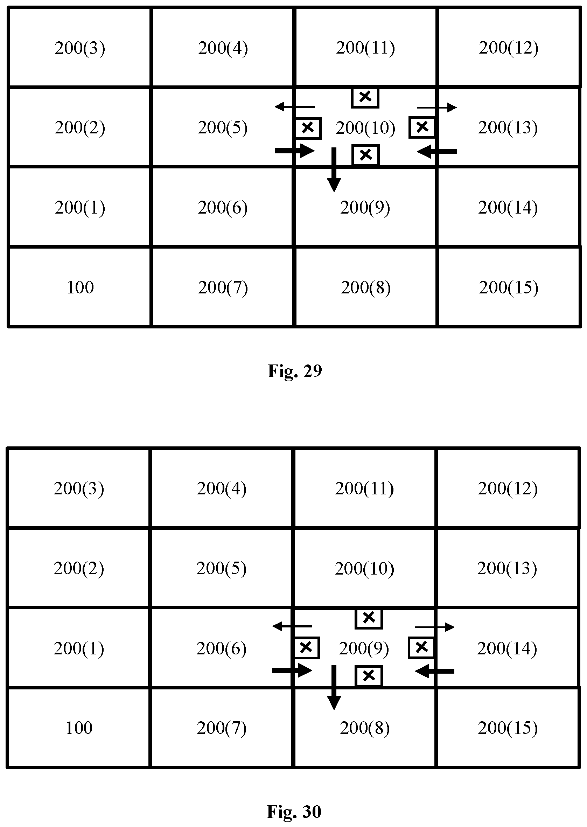

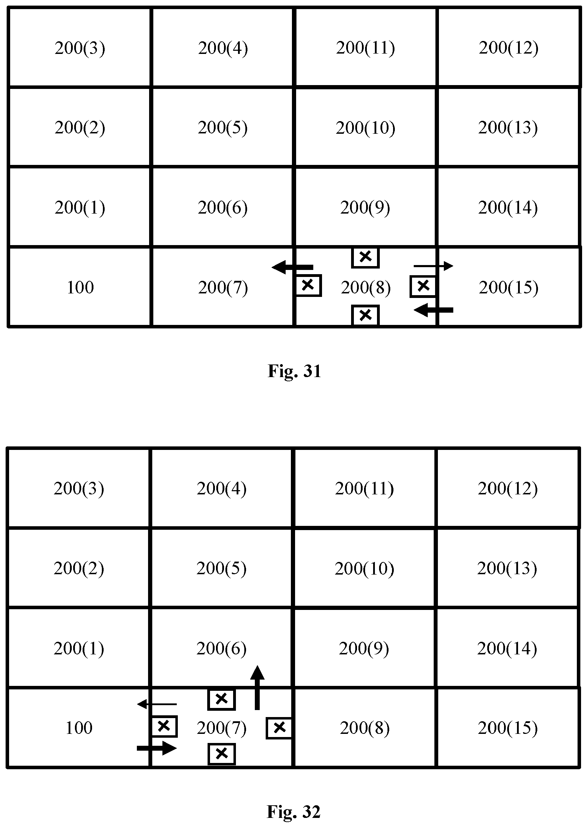

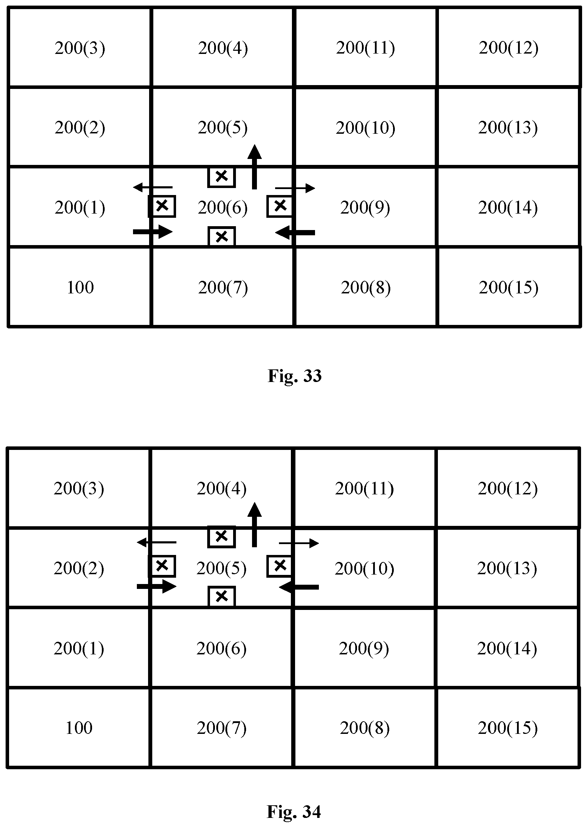

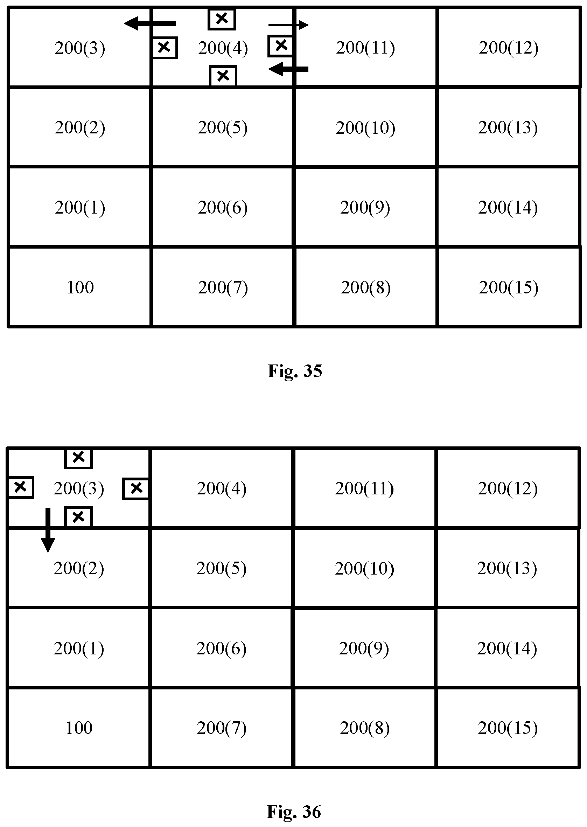

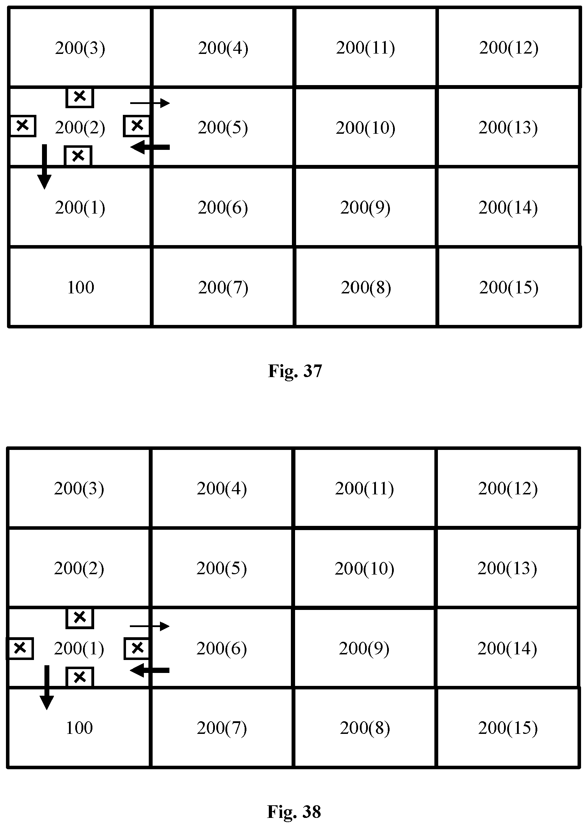

The second pulse signal may represent any pulse or signal being transmitted from a slave display to the master display or from a slave display to another slave display for initiating the display who received the second pulse signal to transmit another first pulse signal to at least one adjacent display(s) being next in the predefined order of edges. The second pulse signal may be a multi-pulse/multiple pulse, in particular a double pulse, but is not limited thereto. The second pulse signal may be different to the first pulse signal. The second pulse may be generated by a pulse generation component. For instance, the second pulse signal may be a mechanical, optical, electronic magnetic, sonic or radio frequency pulse but is not limited thereto.
The position data determination component may represent any component being configured for determining the position data of all slave display(s) and/or the master display based on the unique identifiers and/or contact data of the slave display (s). For instance, the determination of the position, in particular of the position data of the master display and/or the at least one slave display(s), may be based on the sequentially receiving and processing of contact data, including the contact information and the detection information. Alternatively, the determination of the position data may be provided after the master display received a second pulse signal. The exemplary sequential determination of the position data is described in detail in Figs. 8 to 39. The position data determination component may be arranged within the controller or within the master display and being communicatively coupled directly or indirectly by wire or wireless to the controller.

The position data may represent any data indicating the location or position of each one of the master display and the at least one slave display(s). The position data may be provided/determined by the controller, in particular by the position data determination component. The position data may include at least one string and/or at least one integer. The position data may not be interpreted as to be geographical position data. The position data may be interpreted as to be position data with respect to the other displays within a grid. For instance, the position data may be: top/slave display A; bottom/slave display K; left/slave display E; right/slave display X but is not limited thereto.

The unique identifier transmitting component may represent any component being configured for transmitting the unique identifier to the at least one slave display(s), in particular to unique identifier receiving component of the slave display. The transmission may be executed/provided via using a communication channel. The communication channel can be the same as or different to the used communication channel for transmitting the activating message but is not limited thereto. The unique identifier transmitting component may be arranged within the controller or within the master display and being communicatively coupled directly or indirectly by wire or wireless to the controller.

Therefore, the controller of the master display may represent any component being configured (a) for transmitting, in particular providing/generating and transmitting, a activating message to all slave displays being communicatively coupled, in particular directly or indirectly by wire or wireless communicatively coupled, to the master display to activate a detection mode, (b) for determining, in particular identifying, the adjacent slave displays of the master display by using the transceiver system and for recording the determined adjacent slave displays of the master display by providing/generating contact data of the master display, (c) for initiating a transmission/providing of a first pulse signal to at least one adjacent slave display(s) of the master display by using the transceiver system based on predefined order of edges of the master display, (d) for receiving contact data from at least one slave display(s), (e) for assigning, in particular generating and storing, at least one unique identifier for the at least one slave display(s), (f) to initiate a receipt of a second pulse signal by using the transceiver system (120), (g) to generate position data of all slave display(s) based on the unique identifiers and/or contact data of the slave display(s), and (h) to finish the detection mode. In this context, the finishing of the detection mode may be provided by setting the mode by the master display to finish and/or by transmitting a finish activating message from the master display to all slave displays being communicatively coupled to the master display, but is not limited thereto. The finish activating message may be provided and transmitted to all slave displays by a finish activating message component but is not limited thereto. The finish activating message component may represent any component being configured for providing, in particular generation, creating or requesting from an external device or host (device or host being external to the controller and to the master display), at least one finish activating message(s) and for transmitting the at least one finish activating message(s) to all slave displays being communicatively coupled, i.e. directly or indirectly by wire or wireless, to the master display. The finish activating message component may be a single component being able to execute all of these actions or may include a plurality of sub-components, wherein each one of the sub-components is configured for executing another of these actions. The finish activating message component may be arranged within the controller or within the master display and is directly or indirectly by wire or wireless communicatively coupled to the controller. The transmission of the finish activating message from the master display to all slave displays being communicatively coupled to the master display may be provided by using the same or a different communication channel as for transmitting the activating message.

The finish activating message may represent any message or instruction leading to a deactivation of a detection mode or initiating the master display and/or all slave display(s) which received the finish activating message to deactivate/switching off a detection mode. The finish activating message may comprise a string and/or an integer but is not limited thereto.

Additionally, the controller may represent any component being configured (i) to store the unique identifier and/or (j) to transmit the unique identifier to the slave display having provided the contact data.

The transceiver system of the master display may represent any system being configured for identifying or detecting adjacent slave displays, for providing contact information, and for transmitting the contact information to the controller, for forwarding a first pulse signal provided by the controller to the at least one adjacent slave display(s) of the master display or for receiving a first pulse signal instruction provided by the controller, for generating a first pulse signal, and for transmitting the first pulse signal to the at least one adjacent slave display(s) of the master display, for receiving and forwarding a second pulse signal to the controller or for receiving a second pulse signal, for providing second pulse signal information, and for providing the second pulse signal information to the controller. The transceiver system may comprise four transceivers, wherein at each edge of the master display one of the four transceivers is arranged. The transceiver system or each one of the transceivers may comprise a contact identification component, a first pulse signal component, and a second pulse signal component. The contact identification component, the first pulse signal component, and the second pulse signal component may be directly or indirectly by wire or wireless communicatively coupled to each other. The transceiver system may be directly or indirectly by wire or wireless communicatively coupled to the controller of the master display.

The contact identification component may represent any component being configured for identifying, sensing or measuring adjacent slave displays, i.e. a contact between an adjacent slave display to one edge of the master display, for providing contact information, and for transmitting the contact information to the controller. The contact identification component may be a single component being able to execute all of these actions or may include a plurality of sub-components, wherein each one of the sub-components is configured for executing another of these actions. The contact identification component may be directly or indirectly by wire or wireless coupled to the controller of the master display. The contact identification component may be able to measure, sense or identify a contact within a range of distance (D) between an edge of the master display and the at least one adjacent slave display. In this context, the range of distance (D) may be 0~5(cm) but is not limited thereto. The transceiver system or each one of the transceivers of the master display may be arranged at or on at least one edge/sidewall of the master display. Alternatively, the transceiver system or each one of the transceivers of the master display may be arranged fully or at least partially embedded respectively hidden in at least one edge/sidewall of the master display. Alternatively, the transceiver system or each one of the transceivers of the master display may be arranged spaced apart from at least one edge/sidewall of the master display. Alternatively, the transceiver system or each one of the transceivers of the master display may be arranged in the centrum of the master display. For instance, the transceiver system or each one of the transceivers may be a button in form of a mechanical contact switch, a magnetic detector, a pressure sensor, a tactile sensor, and/or an optical sensor but is not limited thereto.

The first pulse signal component may represent any component being configured for forwarding a first pulse signal provided by the controller to the at least one adjacent slave display(s) of the master display or for receiving a first pulse signal instruction provided by the controller, for generating a first pulse signal, and for transmitting the first pulse signal to the at least one adjacent slave display(s) of the master display. The first pulse signal component may be a single component being able to execute all of these actions or may include a plurality of sub-components, wherein each one of the sub-components is configured for executing another of these actions. The first pulse signal component may be directly or indirectly by wire or wireless coupled to the controller of the master display.

The second pulse signal component may represent any component being configured for receiving and forwarding a second pulse signal to the controller or for receiving a second pulse signal, providing second pulse signal information, and for providing the second pulse signal information to the controller. The second pulse signal component may be a single component being able to execute all of these actions or may include a plurality of sub-components, wherein each one of the sub-components is configured for executing another of these actions. The second pulse signal component may be directly or indirectly by wire or wireless coupled to the controller of the master display.

The slave display may represent any display of the large screen display being configured to be controlled by a master display but is not limited thereto. The slave display may be directly or indirectly communicatively coupled by wire or wireless to the master display.

The slave display may be configured for receiving control data associated with control signals from the master display.

Further, the slave display may be configured for receiving power from the master display.

The slave display and the master display may be identical but is not limited thereto.

The slave display may comprise a controller and a transceiver system but is not limited thereto.

Additionally, the slave display may be configured for receiving image data, in particular unprocessed image data with position data, or image data processed by the master display, from the master display. Therefore, the slave display may include a display element, an image data receiving component and/or an image data providing component.

The image data receiving component of the slave display may represent any component being configured for receiving processed image data from the master display or for receiving unprocessed image data with position data from the master display. The image data receiving component may be arranged in the slave display but is not limited thereto. The image data receiving component may be integrated into the controller or may be a separate component. The image data may be any data, e.g. still image data or moving or video image data.

The display element of the slave display may represent any element, device or component being configured for displaying an image according to the processed image data processed and provided by the master display, in particular the controller of the master display.

Alternatively, the display element of the slave display may represent any element, device or component being configured for displaying an image according to the processed image data processed and provided by the slave display, particular the image data providing component of the slave display. The display element may be arranged at the front of the master display and may extend over the entire surface of the front of the master display but is not limited thereto.

The image data providing component of the slave display may represent any component being configured for processing unprocessed image data based on the position data received by the master display. The image data providing component and the at least one slave display, in particular the image data receiving component of the slave display, may be directly or indirectly communicatively coupled by wire or wireless to each other. The image data providing component may be further configured for providing forwarding the image data, i.e. the received or the processed image data, with position data determined/provided by the controller of the master display to the at least one slave display. Preferably, the image data providing component may be further configured for providing the image data, i.e. the received image data, with position data determined/provided by the controller of the master display to the at least one slave display(s).

The slave display comprises a front side, a back side and at least four side walls but are not limited thereto. The slave display may comprise a data memory for storing the determined position data provided by respectively received from the master display and the unique identifier of the slave display. The slave display may comprise an image data providing component. The image data providing component may be any component being configured for providing the image data and the determined position data both provided by respectively received from the master display to another slave display. The slave display may be identical to the master display.

The controller of the slave display may represent any component configured for controlling the slave display and for processing the data received by the slave display. The controller may comprise an activating message receiving component, a first pulse signal receipt initiating component, a first pulse storing component, a contact determination component, a contact data transmitting component, a first pulse signal transmission initiation component, a second pulse signal receipt initiating component, and an own second pulse signal transmission initiation component, but is not limited thereto. Additionally, the controller may comprise an image data processing component. The activating message receiving component, the first pulse signal receipt initiating component, the first pulse storing component, the contact determination component, the contact data transmitting component, the first pulse signal transmission initiation component, the second pulse signal receipt initiating component, and the own second pulse signal transmission initiation component may be directly or indirectly by wire or wireless communicatively coupled to each other.

The activating message receiving component may represent any component being configured for receiving the at least one activating message(s) from the master display. The activating message receiving component is directly or indirectly by wire or wireless communicatively coupled to the activating message component of the master display. The activating message receiving component be arranged within the controller or within the slave display and being communicatively coupled directly or indirectly by wire or wireless to the controller.

The first pulse signal receipt initiating component may represent, in a first alternative, any component being configured for receiving the first pulse signal via the transceiver system. In other words, the transceiver system receives the first pulse signal and forwards the first pulse signal without any processing to the first pulse signal receipt initiating component. The first pulse signal receipt initiating component may represent, in a second alternative, any component being configured for receiving first pulse signal information from the transceiver system indicating a receipt of a first pulse signal. In other words, the transceiver system receives the first pulse signal, provides first pulse signal information, and transmits the provided first pulse signal information to the first pulse signal receipt initiating component.

The first pulse signal information may represent any information, message or data indicating that the transceiver has received a first pulse signal. The first pulse signal information may comprise at least one integer and/or string.

The first pulse signal receipt initiating component may be arranged within the controller or within the slave display and being communicatively coupled directly or indirectly by wire or wireless to the controller. The first pulse signal receipt initiation component may be a single component being able to execute all of these actions or may include a plurality of sub-components, wherein each one of the sub-components is configured for executing another one of these actions.

The first pulse storing component may represent any component being configured for storing detection information indicating the edge at which the first pulse signal was received. The detection information may be identical to the detection information as described above. The first pulse storing component may be arranged within the controller or within the slave display and being communicatively coupled directly or indirectly by wire or wireless to the controller.

The contact determination component may represent any component being configured for receiving or retrieving contact information from the transceiver system, for determining the adjacent slave displays and/or master display of the slave display, and for providing contact data of the slave display. The contact determination component may be a single component being able to execute all of these actions or may include a plurality of sub-components, wherein each one of the sub-components is configured for executing another of these actions. The contact determination component may be arranged within the controller or within the slave display and is directly or indirectly by wire or wireless communicatively coupled to the controller. In other words, the contact determination component determines based on contact information received from the transceiver system which edges of the slave display are in contact, in particular in direct contact, with an adjacent slave display and/or master display. The result of this determination represents the contact data, in particular at least a part of the contact data, of the slave display master display. The contact data of the slave display may be identical to the contact data of the master display.

The contact data transmitting component may represent any component being configured for transmitting contact data to the master display. The contact data transmitting component may be directly or indirectly by wire or wireless communicatively coupled to the contact data receiving component of the master display. The contact data transmitting component may be arranged within the controller or within the slave display and being communicatively coupled directly or indirectly by wire or wireless to the controller. The contact data received from the at least one slave display(s) may be identical, i.e. are made by the same logic, to the contact data of the master display.

The first pulse signal transmission initiation component of the slave display may represent in a first alternative any component being configured for providing, respectively generating or creating, and transmitting, in particular forwarding, the first pulse signal to the at least one adjacent slave display(s) or master display of the slave display via the transceiver system. In this first alternative, the first pulse signal transmission initiation component may be a single component being able to execute all of these actions or may include a plurality of sub-components, wherein each one of the sub-components is configured for executing another one of these actions. For instance, the first pulse signal transmission initiation component may comprise a first pulse signal generating component configured for generating a first pulse signal and a first pulse signal transmitting component configured for transmitting the generated first pulse signal to the transceiver system but is not limited thereto. In a second alternative, the first pulse signal transmission initiation component may represent any component being configured for providing, respectively generating or creating, and transmitting/sending a first pulse signal instruction to the transceiver system for initiating a providing and a transmitting of the first pulse signal to the at least one adjacent slave display(s) or master display of the slave display by the transceiver system. In this second alternative, the first pulse signal transmission initiation component may be a single component being able to execute all of these actions or may include a plurality of sub-components, wherein each one of the sub-components is configured for executing another one of these actions. For instance, the first pulse signal transmission initiation component may comprise a first pulse signal instruction generating component configured for generating a first pulse signal instruction and a first pulse signal instruction transmitting component configured for transmitting the generated first pulse signal instruction to the transceiver system but is not limited thereto. The first pulse signal instruction, the first pulse signal, and the predefined order may be identical to the first pulse signal instruction used in the master display.

The second pulse signal receipt initiating component of the controller of the master display may represent, in a first alternative, any component being configured for receiving the second pulse signal via the transceiver system. In other words, the transceiver system receives the second pulse signal and forwards the second pulse signal without any processing to the second pulse signal receipt initiating component of the controller of the slave display. The second pulse signal receipt initiating component may represent, in a second alternative, any component being configured for receiving second pulse signal information from the transceiver system indicating a receipt of a second pulse signal. In other words, the transceiver system of the slave display receives the second pulse signal, provides second pulse signal information, and transmits the provided second pulse signal information to the second pulse signal receipt initiating component of the controller of the slave display. The second pulse signal information may be identical to the second pulse signal information used in the master display. The second pulse signal receipt initiating component of the controller of the slave display may be arranged within the controller or within the slave display and being communicatively coupled directly or indirectly by wire or wireless to the controller. The second pulse signal receipt initiation component may be a single component being able to execute all of these actions or may include a plurality of sub-components, wherein each one of the sub-components is configured for executing another one of these actions.

The own second pulse signal transmission initiation component may represent in a first alternative any component being configured for providing, respectively generating or creating, and transmitting, in particular forwarding, an own second pulse signal via the transceiver system to the master display or slave display from which the first pulse signal was initially received. In this first alternative, the own second pulse signal transmission initiation component may be a single component being able to execute all of these actions or may include a plurality of sub-components, wherein each one of the sub-components is configured for executing another one of these actions. For instance, the own second pulse signal transmission initiation component may comprise an own second pulse signal generating component configured for generating an own second pulse signal and an own second pulse signal transmitting component configured for transmitting the generated own second pulse signal via the transceiver system to the master display or slave display from which the first pulse signal was initially received. In a second alternative, the own second pulse signal transmission initiation component may represent any component being configured for providing, respectively generating or creating, and transmitting/sending an own second signal instruction to the transceiver system for initiating a providing and a transmitting of the own second pulse signal to the master display or slave display from which the first pulse signal was initially received. In this second alternative, the own second pulse signal transmission initiation component may be a single component being able to execute all of these actions or may include a plurality of sub-components, wherein each one of the sub-components is configured for executing another one of these actions. For instance, the own second pulse signal transmission initiation component may comprise an own second pulse signal instruction generating component configured for generating an own second pulse signal instruction and an own second pulse signal instruction transmitting component configured for transmitting the generated own second pulse signal instruction to the transceiver system but is not limited thereto. Additionally, the own second pulse signal transmission initiation component may be configured for providing/generating and transmitting a complete message to the master display beside the providing and transmission of the own second pulse signal instruction or own second pulse signal.

The own second pulse signal instruction may represent any instruction, message or request leading to respectively initiating a generation of a first pulse signal in/by the transceiver system. The own second pulse signal instruction may include at least one string and/or an integer but is not limited thereto. The own second pulse signal transmission initiation component may be arranged within the controller or within the master display and being communicatively coupled directly or indirectly by wire or wireless to the controller.

The own second signal may represent any pulse or signal being transmitted from the slave display to a slave display or master display for triggering the display who has received the own second pulse to determine the adjacent slave displays, to transmit contact data to another display, and to initiate a transmission of a first pulse signal to at least one adjacent display(s) based on predefined order of the edges of the display. The own second signal may be a double pulse but is not limited thereto. The own second pulse may be generated by a pulse generation component. The own second signal may be different to the first pulse signal and/or identical to the second pulse signal. For instance, the own second pulse signal may be a mechanical, optical, electronic magnetic, sonic or radio frequency pulse but is not limited thereto

Therefore, the controller of the slave display may represent any component being configured for (a) receiving an activating message from a master display being communicatively coupled to the slave display to activate a detection mode, for (b) initiating a receipt of a first pulse signal by using the transceiver system, for (c), after receiving the first pulse, determining the adjacent slave displays by using the transceiver system, for (d) transmitting contact data to the master display, (e) for initiating a transmission of a first pulse signal to at least one adjacent slave display(s) by using the transceiver system based on predefined order of the edges of the slave display, for (f) activating a waiting mode of the slave display after having transmitted the contact data to the master display, for (g) initiating a receipt of a second pulse signal being different than the first pulse signal from at least one adjacent slave display(s) by using the transceiver system, and for (h), when only second pulse signals are received, initiating a providing of an own second pulse signal being different than the first pulse signal and for initiating a transmission of the own second pulse signal to the master display or slave display from which the first pulse signal was initially received by using the transceiver system.

In this context, the waiting mode represents any mode of the master display and/or slave display in which the display, in particular master display or slave display, may only transmit second pulse signals when this display receives a first pulse signal.

The transceiver system of the slave display may represent any system being configured for identifying adjacent slave displays and/or the master display, for providing contact information, for transmitting the contact information to the controller, for receiving and forwarding a first pulse signal to the controller or for receiving a first pulse signal, for providing first pulse signal information, and for providing the first pulse signal information to the controller or for forwarding a first pulse signal provided by the controller to the at least one adjacent slave display(s) or master display of the slave display or for receiving a first pulse signal instruction provided by the controller, for generating a first pulse signal, and for transmitting the first pulse signal to the at least one adjacent slave display(s) or master display of the slave display, for receiving and forwarding a second pulse signal to the controller or for receiving a second pulse signal, providing second pulse signal information, and for providing the second pulse signal information to the controller, for forwarding an own second pulse signal provided by the controller to the master display or slave display from which the first pulse signal was initially received or for receiving an own second pulse signal instruction provided by the controller, for generating an own second pulse signal, and for transmitting the own second pulse signal to the master display or slave display from which the first pulse signal was initially received.

The transceiver system may comprise four transceivers, wherein at each edge of the master display one of the four transceivers is arranged. The transceiver system or each one of the transceivers may comprise a contact identification component, a first pulse signal component, and a second pulse signal component. The contact identification component, the first pulse signal component, the second pulse signal component, and the own second pulse signal component may be directly or indirectly by wire or wireless communicatively coupled to each other. The transceiver system may be directly or indirectly by wire or wireless communicatively coupled to the controller of the slave display.

The contact identification component of the transceiver system of the slave display may represent any component being configured for identifying adjacent slave displays and/or the master display, for providing contact information, and for transmitting the contact information to the controller. The contact identification component may be a single component being able to execute all of these actions or may include a plurality of sub-components, wherein each one of the sub-components is configured for executing another of these actions. The contact identification component may be directly or indirectly by wire or wireless coupled to the controller of the slave display. The contact identification component may be able to measure, sense or identify a contact within a range of distance (D) between an edge of the slave display and the at least one adjacent slave display or master display. In this context, the range of distance (D) may be 0~5(cm) but is not limited thereto. The transceiver system or each one of the transceivers of the slave display may be arranged at or on at least one edge/sidewall of the slave display. Alternatively, the transceiver system or each one of the transceivers of the slave display may be arranged fully or at least partially embedded respectively hidden in at least one edge/sidewall of the slave display. Alternatively, the transceiver system or each one of the transceivers of the slave display may be arranged spaced apart from at least one edge/sidewall of the slave display. Alternatively, the transceiver system or each one of the transceivers of the slave display may be arranged in the slave display. For instance, the transceiver system or each one of the transceivers may be a button in form of a mechanical contact switch, a magnetic detector, a pressure sensor, a tactile sensor, and/or an optical sensor but is not limited thereto.

The first pulse signal component of the transceiver system of the slave display may represent any component being configured for receiving and forwarding a first pulse signal to the controller or for receiving a first pulse signal, for providing first pulse signal information, and for providing the first pulse signal information to the controller or being configured for forwarding a first pulse signal provided by the controller to the at least one adjacent slave display(s) or master display of the slave display or for receiving a first pulse signal instruction provided by the controller, for generating a first pulse signal, and for transmitting the first pulse signal to the at least one adjacent slave display(s) or master display of the slave display. The first pulse signal component may be a single component being able to execute all of these actions or may include a plurality of sub-components, wherein each one of the sub-components is configured for executing another of these actions. The first pulse signal component may be directly or indirectly by wire or wireless coupled to the controller of the master display.

The second pulse signal component of the transceiver system of the slave display may represent any component being configured for receiving and forwarding a second pulse signal to the controller or for receiving a second pulse signal, for providing second pulse signal information, and for providing the second pulse signal information to the controller. The second pulse signal component may be a single component being able to execute all of these actions or may include a plurality of sub-components, wherein each one of the sub-components is configured for executing another of these actions. The second pulse signal component may be directly or indirectly by wire or wireless coupled to the controller of the master display.

The own second pulse signal component of the transceiver system of the slave display may represent any component being configured for forwarding an own second pulse signal provided by the controller to the master display or slave display from which the first pulse signal was initially received or for receiving an own second pulse signal instruction provided by the controller, for generating an own second pulse signal, and for transmitting the own second pulse signal to the master display or slave display from which the first pulse signal was initially received. The own second pulse signal component may be a single component being able to execute all of these actions or may include a plurality of sub-components, wherein each one of the sub-components is configured for executing another of these actions. The own second pulse signal component may be directly or indirectly by wire or wireless coupled to the controller of the master display.

By providing position data of the master display and the at least one slave display in the above described manner, an automatic configuration of large display screens above the 3x3 size can be provided such that a reduction of the time-consumption of a configuration of a multi-display arrangement and an increased practicality of the multi-display arrangement can be provided.

In an embodiment of the master display, the transceiver system comprises four transceivers, wherein one of the four transceivers is arranged at each edge of the master display.

In an embodiment of the master display, the contact data transmitted from the at least one slave display(s) comprises contact information indicating contacts of the transceiver system of the slave display and detection information indicating at which edge of the slave display the first pulse signal was received.

In an embodiment of the master display, the controller is further configured to store the unique identifier and/or to transmit the unique identifier to the slave display.

In an embodiment of the master display, the first pulse signal is a single pulse signal and the second pulse signal is a multi-pulse signal.

In an embodiment of the master display, the unique identifier fully or partially includes the contact data.

In an embodiment of the master display, the controller comprises an activating message component being configured for providing at least one activating message(s) and transmitting the at least one activating message(s) to all slave displays being communicatively coupled to the master display; a contact determination component being configured for receiving contact information from the transceiver system, for determining the adjacent slave displays of the master display, and for providing contact data of the master display; a first pulse signal transmission initiation component being configured for providing and transmitting the first pulse signal to the at least one adjacent slave display(s) of the master display via the transceiver system or for providing and transmitting a first pulse signal instruction to the transceiver system for initiating a providing and a transmitting of the first pulse signal to the at least one adjacent slave display(s) of the master display by the transceiver system; a contact data receiving component configured for receiving contact data from the at least one slave display(s); a unique identifier providing component being configured for providing the unique identifier based on the received contact data from at least one slave display(s) and/or the master display; a storing component being configured for storing the contact data and/or the unique identifier; a second pulse signal receipt initiating component being configured for receiving the second pulse signal via the transceiver system or for receiving second pulse signal information from the transceiver system indicating a receipt of a second pulse signal; a position data determination component being configured for determining the position data of all slave display (s) based on the unique identifiers of the slave display (s).

In an embodiment of the master display, the controller further comprises a unique identifier transmitting component configured for transmitting the unique identifier to the at least one slave display(s).

In an embodiment of the master display, the transceiver system comprises a contact identification component being configured for identifying adjacent slave displays, for providing contact information, and for transmitting the contact information to the controller; a first pulse signal component being configured for forwarding a first pulse signal provided by the controller to the at least one adjacent slave display(s) of the master display or for receiving a first pulse signal instruction provided by the controller, for generating a first pulse signal, and for transmitting the first pulse signal to the at least one adjacent slave display(s) of the master display; a second pulse signal component being configured for receiving and forwarding a second pulse signal to the controller or for receiving a second pulse signal, for generating/providing second pulse signal information, and for providing/transmitting the second pulse signal information to the controller.

In a further aspect, a slave display is presented. The slave display comprises a controller, a transceiver system being assigned to at least one edge(s) of the slave display, wherein the controller is configured to receive an activating message from a master display being communicatively coupled to the slave display to activate a detection mode; to initiate a receipt of a first pulse signal by using the transceiver system; after receiving the first pulse, to determine the adjacent slave displays by using the transceiver system; to transmit contact data to the master display; to initiate a transmission of a first pulse signal to at least one adjacent slave display(s) by using the transceiver system based on predefined order of the edges of the slave display; to activate a waiting mode of the slave display after having transmitted the contact data to the master display; to initiate a receipt of a second pulse signal being different than the first pulse signal from at least one adjacent slave display(s) by using the transceiver system; when only second pulse signals are received, to initiate a providing of an own second pulse signal being different than the first pulse signal and to initiate a transmission of the own second pulse signal to the master display or slave display from which the first pulse signal was initially received by using the transceiver system.

In an embodiment of the slave display, the transceiver system comprises four transceivers, wherein one of the four transceivers is arranged at each edge of the slave display.

In an embodiment of the slave display, the controller comprises an activating message receiving component being configured for receiving the at least one activating message(s) from the master display; a first pulse signal receipt initiating component being configured for receiving the first pulse signal via the transceiver system or for receiving first pulse signal information from the transceiver system indicating a receipt of a first pulse signal; a first pulse signal storing component being configured for storing detection information indicating the edge at which the first pulse signal was received; a contact determination component being configured for receiving contact information from the transceiver system, for determining the adjacent slave displays (200) and/or master display of the slave display, and for providing contact data of the slave display; a contact data transmitting component being configured for transmitting contact data to the master display; a first pulse signal transmission initiation component being configured for providing and transmitting a first pulse signal to the at least one adjacent slave display(s) or the master display of the slave display via the transceiver system or for providing and transmitting a first pulse signal instruction to the transceiver system for initiating a providing and a transmitting of the first pulse signal to the at least one adjacent slave display(s) or the master display of the slave display by the transceiver system; a second pulse signal receipt initiating component being configured for receiving the second pulse signal via the transceiver system or for receiving second pulse signal information from the transceiver system indicating a receipt of a second pulse signal; an own second pulse signal transmission initiation component being configured for providing and transmitting an own second pulse signal to the at least one adjacent slave display(s) or the master display of the slave display via the transceiver system or for providing and transmitting an own second pulse signal instruction to the transceiver system for initiating a providing and a transmitting of the own second pulse signal to the master display or slave display from which the first pulse signal was initially received.

In an embodiment of the slave display, the transceiver system comprises a contact identification component being configured for identifying adjacent slave displays and/or the master display, for providing contact information, and for transmitting the contact information to the controller; a first pulse signal component being configured for receiving and forwarding a first pulse signal to the controller or for receiving a first pulse signal, for providing first pulse signal information, and for providing the first pulse signal information to the controller or configured for forwarding a first pulse signal provided by the controller to the at least one adjacent slave display(s) or master display of the slave display or for receiving a first pulse signal instruction provided by the controller, for generating a first pulse signal, and for transmitting the first pulse signal to the at least one adjacent slave display(s) or master display of the slave display; a second pulse signal component being configured for receiving and forwarding a second pulse signal to the controller or for receiving a second pulse signal, providing second pulse signal information, and for providing the second pulse signal information to the controller; an own second pulse signal component being configured for forwarding an own second pulse signal provided by the controller to the master display or slave display from which the first pulse signal was initially received or for receiving an own second pulse signal instruction provided by the controller, for generating an own second pulse signal, and for transmitting the own second pulse signal to the master display or slave display from which the first pulse signal was initially received.

In a further aspect, a large screen display is presented. The large screen display comprises a master display as described above and at least one slave display as described above. In an embodiment of the large screen display, the large screen display is a display screen consisting of more than a 3x3 large screen display. For instance, the large screen display may be a 4x4 or a 10x10 large screen display but is not limited thereto. Alternatively, the large screen display may have an irregular configuration like a X-form, a U-Form, or a L-form but is not limited thereto.

In a further aspect, a method for detecting position data of displays of a large screen display, wherein the large screen display comprises a master display and a plurality of slave displays being communicatively coupled to the master display, each one of the displays comprises at least one transceiver assigned to at least one edge of the displays, is provided or presented. The method comprises the steps of transmitting, by the master display, an activating message to the slave displays to activate a detection mode; detecting, by the master display, at least one adjacent slave display(s) of the master display; transmitting, by the master display, a first pulse signal via the at least one transceiver to the at least one adjacent first slave display of the master display based on a predefined order of edges; receiving, by at least one transceiver of the first slave display, the first pulse signal; after receiving the first pulse by the first slave display, detecting adjacent other slave displays of the first slave display by the first slave display; providing and transmitting contact data from the first slave display to the master display; receiving, by the master display, the contact data from the first slave display, assigning, by the master display, a unique identifier to the first slave display; transmitting a first pulse signal to an adjacent other slave display(s) of the first slave display by sending the first pulse signal based on predefined order of the edges; after transmitting the first pulse signal by the first slave display, activating, by the first slave display, a waiting mode of the first slave display; receiving, by the other slave display, a first pulse signal; after receiving the first pulse by the other slave display, detecting, by the other slave display, adjacent further slave displays of the other slave display; providing and transmitting contact data from the other slave display to the master display; receiving, by the master display, contact data from the other slave display, assigning, by the master display, a unique identifier to the other slave display; transmitting, by the other slave display, a first pulse signal to an adjacent further slave display(s) based on predefined order of the edges; after transmitting the first pulse signal by the other slave display, activating, by the other slave display, a waiting mode of the other slave display; receiving, by the other slave display, a second pulse signal being different than the first pulse signal from the further adjacent slave display; when the other slave display only receives second pulse signals, providing an own second pulse signal being different than the first pulse signal and transmitting the own second pulse signal to the first slave display from which the first pulse signal was received; when the first slave display only receives second pulse signals, providing an own second pulse signal being different than the first pulse signal and transmitting the own second pulse signal to the master display from which the first pulse signal was received; receiving a second pulse signal, by the master display, from the first slave display; generating, by the master display, position data of all slave display(s) based on the unique identifiers of the slave display(s); and setting, by the master display, the detection mode to finish.

By providing position data of the master display and the at least one slave display in the above manner, an automatic configuration of large screen display with above the 3x3 or 4x4 sizes can be provided such that a reduction of the time-consumption of a configuration of a multi-display arrangement and an increased practicality of the multi-display arrangement can be provided.

In the following, the disclosure or further embodiments and advantages of the disclosure are explained in more detail based on drawings, wherein the drawings describe only embodiments of the disclosure. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.

### BRIEF DESCRIPTION OF THE DRAWINGS

In the following, the present disclosure is described with reference to the enclosed figures:
Fig. 1 illustrates a master display according to the present disclosure.
Fig. 2 illustrates a slave display according to the present disclosure.
Fig. 3 illustrates a first exemplary embodiment of the arrangement of the transceiver system and the controller in the master display according to Fig. 1.
Fig. 4 illustrates a second exemplary embodiment of the arrangement of the transceiver system and the controller in the master display and the slave display according to Figs. 1 and 2.
Fig. 5 illustrates a large display screen according to the disclosure.
Fig. 6 illustrates a first exemplary embodiment of a connection of the master display and the slave display.
Fig. 7 illustrates a second exemplary embodiment of a connection of the master display and the slave display.
Fig. 8 illustrates a method for detecting position data of displays of a large screen display according to the present disclosure.
Fig. 9 illustrates a first step of an exemplary embodiment of the method according to Fig. 8.
Fig. 10 illustrates a further step of an exemplary embodiment of the method according to Fig. 8.
Fig. 11 illustrates a further step of an exemplary embodiment of the method according to Fig. 8.
Fig. 12 illustrates a further step of an exemplary embodiment of the method according to Fig. 8.
Fig. 13 illustrates a further step of an exemplary embodiment of the method according to Fig. 8.
Fig. 14 illustrates a further step of an exemplary embodiment of the method according to Fig. 8.
Fig. 15 illustrates a further step of an exemplary embodiment of the method according to Fig. 8.
Fig. 16 illustrates a further step of an exemplary embodiment of the method according to Fig. 8.
Fig. 17 illustrates a further step of an exemplary embodiment of the method according to Fig. 8.
Fig. 18 illustrates a further step of an exemplary embodiment of the method according to Fig. 8.
Fig. 19 illustrates a further step of an exemplary embodiment of the method according to Fig. 8.
Fig. 20 illustrates a further step of an exemplary embodiment of the method according to Fig. 8.
Fig. 21 illustrates a further step of an exemplary embodiment of the method according to Fig. 8.
Fig. 22 illustrates a further step of an exemplary embodiment of the method according to Fig. 8.
Fig. 23 illustrates a further step of an exemplary embodiment of the method according to Fig. 8.
Fig. 24 illustrates a further step of an exemplary embodiment of the method according to Fig. 8.
Fig. 25 illustrates a further step of an exemplary embodiment of the method according to Fig. 8.
Fig. 26 illustrates a further step of an exemplary embodiment of the method according to Fig. 8.
Fig. 27 illustrates a further step of an exemplary embodiment of the method according to Fig. 8.
Fig. 28 illustrates a further step of an exemplary embodiment of the method according to Fig. 8.
Fig. 29 illustrates a further step of an exemplary embodiment of the method according to Fig. 8.
Fig. 30 illustrates a further step of an exemplary embodiment of the method according to Fig. 8.
Fig. 31 illustrates a further step of an exemplary embodiment of the method according to Fig. 8.
Fig. 32 illustrates a further step of an exemplary embodiment of the method according to Fig. 8.
Fig. 33 illustrates a further step of an exemplary embodiment of the method according to Fig. 8.
Fig. 34 illustrates a further step of an exemplary embodiment of the method according to Fig. 8.
Fig. 35 illustrates a further step of an exemplary embodiment of the method according to Fig. 8.
Fig. 36 illustrates a further step of an exemplary embodiment of the method according to Fig. 8.
Fig. 37illustrates a further step of an exemplary embodiment of the method according to Fig. 8.
Fig. 38 illustrates a further step of an exemplary embodiment of the method according to Fig. 8.
Fig. 39 illustrates a further step of an exemplary embodiment of the method according to Fig. 8.

### DETAILED DESCRIPTION OF EMBODIMENT

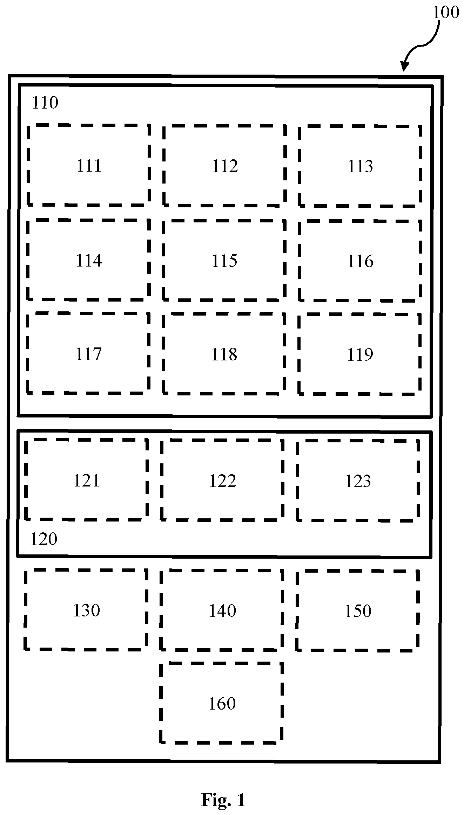

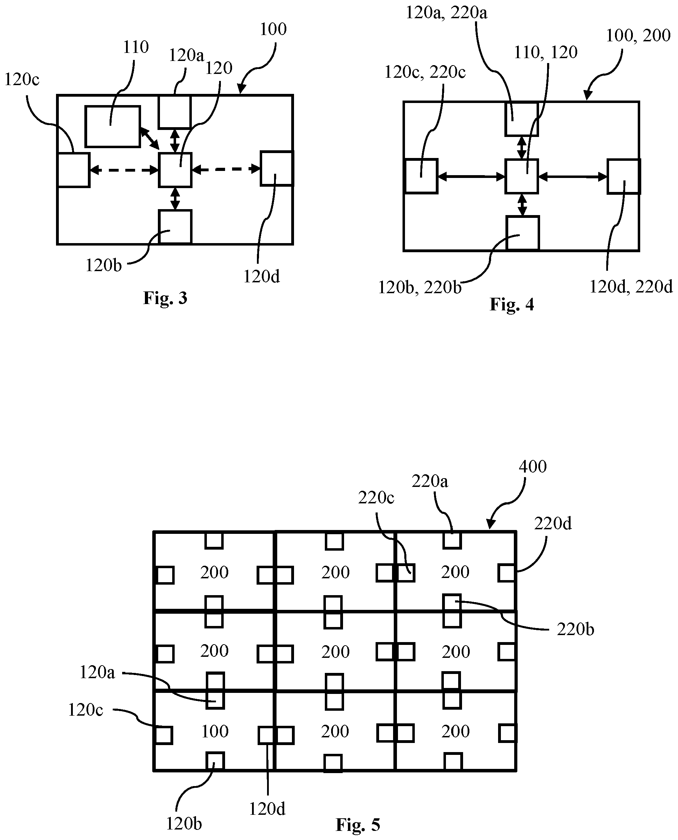

Fig. 1 shows a master display according to the present disclosure. The master display 100 of a large screen display 400 of Fig. 5 comprises a controller 110 and a transceiver system 120.

Optionally, the controller 110 comprises an activating message component 111, a contact determination component 112, a first pulse signal transmission initiation component 113, a contact data receiving component 114, a unique identifier providing component 115, a storing component 116, a second pulse signal receipt initiating component 117, and a position data determination component 118. The activating message component 111, the contact determination component 112, the first pulse signal transmission initiation component 113, the contact data receiving component 114, the unique identifier providing component 115, the storing component 116, the second pulse signal receipt initiating component 117, and the position data determination component 118 are communicatively coupled to each other, preferably by wire. Each of abovementioned components may be a circuit, an integrated circuit, a chip or a set of chips. The controller 110 may include a central processing unit (CPU) or microprocessor having image data processing and computation functions, and/or other programmable general-purpose or special-purpose microprocessor, a digital signal processor (DSP), an image processing unit (IPU), a graphics processing unit (GPU), a programmable controller, an application specific integrated circuit (ASIC), a programmable logic device (PLD), Field Programmable Gate Array (FPGA), an image processor, other similar processing devices or a combination of these devices. The activating message component 111 is configured for providing at least one activating message(s) and transmitting the at least one activating message(s) to all slave displays 200 being communicatively coupled to the master display 100 via wireless method (for example WiFi or Bluetooth, etc.). The contact determination component 112 is configured for receiving contact information from the transceiver system 120, for determining the adjacent slave displays 200 of the master display 100, and for providing contact data of the master display 100. The first pulse signal transmission initiation component 113 is configured for providing and transmitting the first pulse signal to the at least one adjacent slave display(s) 200 of the master display 100 via the transceiver system 120 or for providing and transmitting a first pulse signal instruction to the transceiver system 120 for initiating a providing and a transmitting of the first pulse signal to the at least one adjacent slave display(s) 200 of the master display 100 by the transceiver system 120. The contact data receiving component 114 is configured for receiving contact data from at least one slave display(s) 200. The unique identifier providing component 115 is configured for providing a unique identifier based on the received contact data from at least one slave display(s) 200 and/or the master display 100. The storing component 116 is configured for storing the contact data and/or the unique identifier (for example ID number). The second pulse signal receipt initiating component 117 is configured for receiving the second pulse signal via the transceiver system 120 or for receiving second pulse signal information from the transceiver system 120 indicating a receipt of a second pulse signal. The position data determination component 118 is configured for determining the position data of all slave display (s) 200 based on the unique identifiers and/or contact data of the slave display (s) 200.

Optionally, the transceiver system 120 comprises a contact identification component 121, a first pulse signal component 122, and a second pulse signal component 123. Each of components 121, 122, 123 may be a circuit, an integrated circuit, a chip or a set of chips. The contact identification component 121 is configured for identifying adjacent slave displays 200, for providing contact information, and for transmitting the contact information to the controller 110. The first pulse signal component 122 is configured for forwarding a first pulse signal provided by the controller 110 to the at least one adjacent slave display(s) 200 of the master display 100 or for receiving a first pulse signal instruction provided by the controller 110, for generating a first pulse signal, and for transmitting the first pulse signal to the at least one adjacent slave display(s) 200 of the master display 100. The second pulse signal component 123 is configured for receiving and forwarding a second pulse signal to the controller 110 or for receiving a second pulse signal, providing second pulse signal information, and for providing the second pulse signal information to the controller 110. The first pulse signal component 122 and second pulse signal component 123 may be a transceiver. The transceiver may include a transmitter for outputting the first or second pulse signal and a receiver for receiving the first and second pulse signal.

Optionally, the master display 100 further comprises an image data receiving component 130, a display element 140, an image data providing component 150, and a user input component 160. The image data receiving component 130 and the image data providing component 150 may be a circuit, an integrated circuit, a chip or a set of chips.

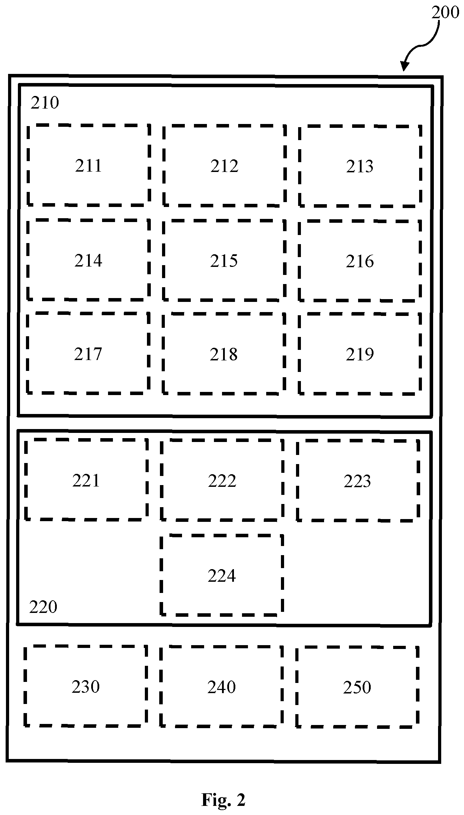

Fig. 2 shows a slave display according to the present disclosure. The slave display 200 comprises a controller 210 and a transceiver system 220. Basically, the components and elements of the master and slave display might be similar. Thus, any of the slave display might be used as a master display.

Optionally, the controller 210 of the slave display 200 comprises an activating message receiving component 211, a first pulse signal receipt initiating component 212, a first pulse signal storing component 213, a contact determination component 214, a contact data transmitting component 215, a first pulse signal transmission initiation component 216, a second pulse signal receipt initiating component 217, an own second pulse signal transmission initiation component 218, and a storing component 219. Each of abovementioned components may be a circuit, an integrated circuit, a chip or a set of chips. The activating message receiving component 211, the first pulse signal receipt initiating component 212, the first pulse signal storing component 213, the contact determination component 214, the contact data transmitting component 215, the first pulse signal transmission initiation component 216, the second pulse signal receipt initiating component 217, and the own second pulse signal transmission initiation component 218 are coupled to each other by wire. The activating message receiving component 211 is configured for receiving the at least one activating message(s) from the master display 100. The first pulse signal receipt initiating component 212 is configured for receiving the first pulse signal via the transceiver system 220 or for receiving first pulse signal information from the transceiver system 220 indicating a receipt of a first pulse signal. The first pulse signal storing component 213 is configured for storing detection information indicating the edge at which the first pulse signal was received and the unique identifier itself. The contact determination component 214 is configured for receiving contact information from the transceiver system 220, for determining the adjacent slave displays 200 and/or master display 100 of the slave display 200, and for providing contact data of the slave display 200. The contact data transmitting component 215 is configured for transmitting contact data to the master display 100. The first pulse signal transmission initiation component (216) configured for providing and transmitting a first pulse signal to the at least one adjacent slave display(s) 200 or the master display 100 of the slave display 200 via the transceiver system 220 or for providing and transmitting a first pulse signal instruction to the transceiver system 220 for initiating a providing and a transmitting of the first pulse signal to the at least one adjacent slave display(s) 200 or the master display 100 of the slave display 200 by the transceiver system 220. The second pulse signal receipt initiating component 217 is configured for receiving the second pulse signal via the transceiver system 220 or for receiving second pulse signal information from the transceiver system 220 indicating a receipt of a second pulse signal. The own second pulse signal transmission initiation component 218 is configured for providing and transmitting an own second pulse signal to the at least one adjacent slave display(s) 200 or the master display 100 of the slave display 200 via the transceiver system 220 or for providing and transmitting an own second pulse signal instruction to the transceiver system 220 for initiating a providing and a transmitting of the own second pulse signal to the master display 100 or slave display 200 from which the first pulse signal was initially received. The storing component 219 is configured for storing the unique identifier itself (ID number) provided by the master display 100.

Optionally, the transceiver system 220 comprises a contact identification component 221, a first pulse signal component 222, a second pulse signal component 223, and an own second pulse signal component 224. The contact identification component 221, the first pulse signal component 222, the second pulse signal component 223, and the own second pulse signal component 224 are communicatively coupled to each other by wire. The contact identification component 221 is configured for identifying adjacent slave displays 200 and/or the master display 100, for providing contact information, and for transmitting the contact information to the controller 210. The first pulse signal component 222 is configured for receiving and forwarding a first pulse signal to the controller 210 or for receiving a first pulse signal, providing first pulse signal information, and for providing the first pulse signal information to the controller 210 or configured for forwarding a first pulse signal provided by the controller 210 to the at least one adjacent slave display(s) 200 or master display 100 of the slave display 200 or for receiving a first pulse signal instruction provided by the controller 210, generating a first pulse signal, and transmitting the first pulse signal to the at least one adjacent slave display(s) 200 or master display 100 of the slave display 200. The second pulse signal component 223 is configured for receiving and forwarding a second pulse signal to the controller 210 or for receiving a second pulse signal, for providing second pulse signal information, and for providing the second pulse signal information to the controller 210. The own second pulse signal component 224 is configured for forwarding an own second pulse signal provided by the controller 210 to the master display 100 or slave display 200 from which the first pulse signal was initially received or for receiving an own second pulse signal instruction provided by the controller 210, for generating an own second pulse signal, and transmitting the own second pulse signal to the master display 100 or slave display 200 from which the first pulse signal was initially received.

Optionally, the slave display further comprises an image data receiving component 230, a display element 240, and an image data providing component 250. The image data receiving component 230 and the image data providing component 250 may be a circuit, an integrated circuit, a chip or a set of chips.

Fig. 3 shows a first exemplary embodiment of the arrangement of the transceiver system and the controller in the master display according to Fig. 1. The transceiver system 120 of the master display 100 is arranged in the master display 100 and detects, measures or senses indirectly, i.e. by an indirect measuring method, if a slave display 200 is in contact, in particular direct contact with the edges of the master display 100. The transceiver system 120 and the controller 110 are physically separated. The controller 110 being communicatively coupled, in particular with a two-way communication, to the transceiver system 120.

Fig. 4 shows a second exemplary embodiment of the arrangement of the transceiver system and the controller in the master display and the slave display according to Figs. 1 and 2. The transceiver system 120 of the master display 100 may further include four transceivers 120a, 120b, 120c, 120d located edges of the master display 100. The transceiver system 120 of the master display 100 is communicatively coupled with the controller 110 and arranged in the master display 100 and detects, measures or senses indirectly, i.e. by an indirect measuring method, if a slave display 200 is in contact, in particular direct contact with the edges of the master display 100 through the four transceivers 120a, 120b, 120c, 120d. The controller 110 being communicatively coupled, in particular with a two-way communication, to the transceiver system 120. The transceiver system 220 of the slave display 200 may further include four transceivers 220a, 220b, 220c, 220d located edges of the slave display 200. The transceiver system 220 of the slave display 200 is communicatively coupled with the controller 210 and arranged in the slave display 200.

Fig. 5 shows a large screen display of the disclosure. The large screen display 400 has a 3x3 matrix shape having one master display 100 and eight slave displays 200. Each one of the slave displays 200 and the master display 100 may comprise four transceivers 120a, 120b, 120c, 120d, 220a, 220b, 220c, 220d, wherein one of the four transceivers is arranged at each edge of the master display 100 or slave display 200. Transceivers of adjacent display (master display or slave display) might correspond to each other, so that the sending display might output the first or second pulse signal, e.g. optically, mechanically or just electrically, whereas the adjacent transceiver of the adjacent display, might have a transmitter and a receiver. The transmitter outputs the first or second pulse signal. The receiver, is for receiving the pulses output by the transmitter of the sending display (Slave display or master display).

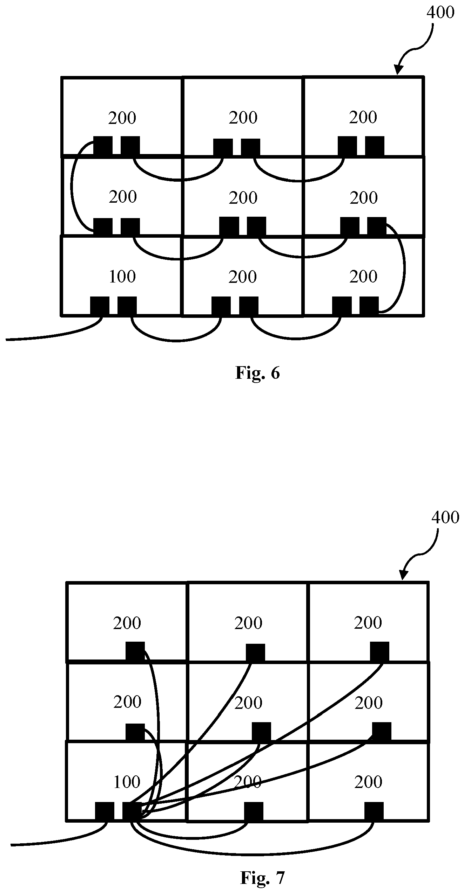

Fig. 6 shows a first embodiment of a connection of a large screen display. The master display 100 is communicatively coupled directly or indirectly by wire or wireless to an external host (not shown). The external host is an electronic device which may be a laptop, a smartphone or a tablet, for example. The master display 100 and the plurality of slave displays 200 of the large screen display 400 are connected one by one in a serial daisy chain with - but not limited to - a cable, HDMI cable or a USB cable. In other words, when an image data provided by the external host is transmitted from the master display 100 to the plurality of slave displays 200 one by one. The following slave displays 200 are linked, coupled or connected to the master display 100 as a series. The connection forms an open loop not a closed loop.

Fig. 7 shows a second embodiment of a large screen display, where the master display 100 is directly or indirectly communicatively coupled to the external host with e.g. cable, HDMI cable or USB cable. Each one of the slave displays 200 is separately and independently communicatively coupled to the master display 100, with e.g. HDMI cable or USB cable, for receiving the image data. Thus, it is a star coupling between master and slave display.

Fig. 8 shows a method for detecting position data of displays of a large screen display of the disclosure. In a first step S1, an activating message is transmitted by the master display 100 to the slave displays 200 to activate a detection mode. The storing component 116 of the master display 100 is configured to store the detection mode. The storing component 219 of the slave display 200 is configured to store the detection mode as well. In second step S2, the adjacent slave displays 200 of the master display 100 are detected by the master display 100. In a third step S3, a first pulse signal is transmitted by the master display 100 via the at least one transceiver 120a, 120b, 120c, 120d to an adjacent first slave display 200 of the master display 100 based on a predefined order of edges ("top, bottom, left and right edge"). In a fourth step S4, the first pulse signal is receiving by the first slave display 200 via at least one transceiver 220a, 220b, 220c, 220d. In a fifth step S5, after receiving the first pulse by the first slave display 200, adjacent other slave displays 200 of the first slave display 200 are detected by the first slave display 200. In a sixth step S6, contact data are provided and transmitted from the first slave display 200 to the master display 100. In a seventh step S7, contact data are received by the master display 100 from the first slave display 200. In an eighth step S8, a unique identifier is assigned by the master display 100 to the first slave display 200. In a ninth step S9, a first pulse signal is transmitted to an adjacent other slave display(s) 200 of the first slave display 200 by sending the first pulse signal based on predefined order of the edges. In a tenth step S10, after transmitting the first pulse signal by the first slave display 200, a waiting mode of the first slave display 200 is activated by the first slave display 200. In an eleventh step S11, a first pulse signal is received by the other slave display 200. In a twelfth step S12, after receiving the first pulse by the other slave display 200, adjacent further slave displays 200 of the other slave display 200 are detected by the other slave display 200. In a thirteenth step S13, contact data are provided and transmitted from the other slave display to the master display. In a fourteenth step S14, contact data are received by the master display from the other slave display 200. In a fifteenth step S15, a unique identifier is assigned by the master display 100 to the other slave display 200. In the sixteenth step S16, a first pulse signal is transmitted by the other slave display 200 to an adjacent further slave display(s) 200 based on predefined order of the edges. In a seventeenth step S17, after transmitting the first pulse signal by the other slave display 200, a waiting mode of the other slave display 200 is activated by the other slave display 200. This proceeding can be repeated until step S18 occurs. In an eighteenth step S18, a second pulse signal being different than the first pulse signal is receiving by the other slave display 200 from the further adjacent slave display 200. In a nineteenth step S19, when the other slave display 200 only receives second pulse signals, an own second pulse signal being different than the first pulse signal is provided and the own second pulse signal is transmitted to the first slave display 200 from which the first pulse signal was received. In a twentieth step S20, when the first slave display 200 only receives second pulse signals, an own second pulse signal being different than the first pulse signal is provided/generated and the own second pulse signal is transmitted to the master display 100 from which the first pulse signal was received. In a twenty-first step S21, a second pulse signal is received by the master display 100 from the first slave display 200. In a twenty-second step 22, position data of all slave display(s) 200 are generated by the master display 100 based on the unique identifiers and/or contact data of the slave display(s) 200. In a twenty-third step S23, the detection mode is set to finish by the master display 100.

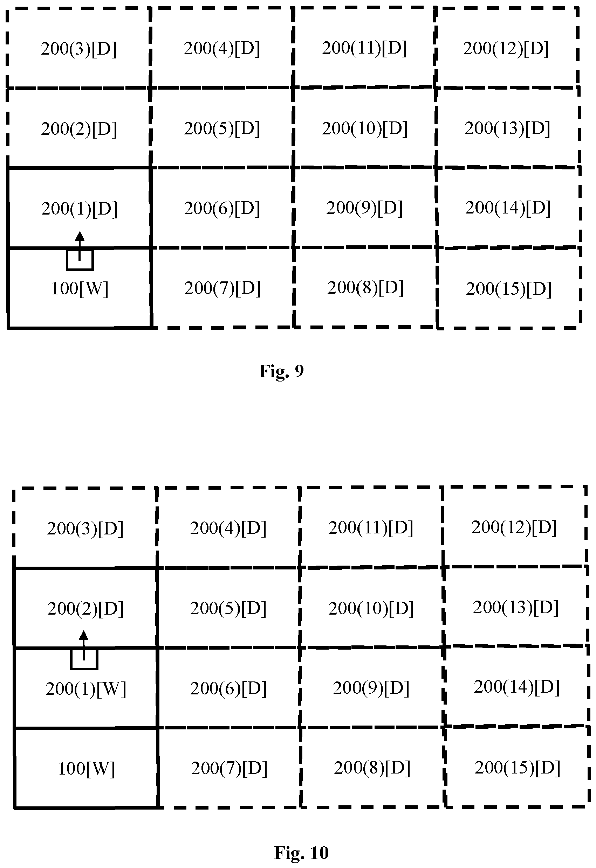

Fig. 9 shows a first step of the exemplary embodiment of a method according to Fig. 8.

The master display 100 transmits an activating message to all slave displays 200(1) to 200(15) being communicatively coupled to the mater display 100 via wire (HDMI or USB cable) or wireless (WiFi) method. All of the slave displays 200(1) to 200(15) have received the activating message and has activated a detection mode [D].

The master display 100 has detected that each of its upper and right edge are in contact with a slave display, i.e. upper edge is in contact with slave display 200(1) and the right edge is in contact with slave display 200(7). Therefore, the contact information of the master display 100 is "1001". As mentioned above, the detection information of the master display 100 is "0000" because the master display 100 is not initially triggered by a first pulse signal. The resulting contact data of the master display 100 are "0000 1001". The predefined order of the master display 100 is "top, bottom, left, right edge". Therefore, a first pulse signal generated by the master display 100 is first transmitted at the top edge to the slave display 200(1). After transmitting the first pulse signal to the slave display 200(1), the master display 100 is switched to a waiting mode [W]. In this waiting mode, the master display 100 only responds a second pulse signal when receiving another first pulse signal. The position data of the master display 100 are set/identified by the master display 100 as to be [1;1].

In the following Figs. 10 to 39, the first pulse signal is depicted as an arrow and the second pulse signal is depicted as an bold arrow.

Fig. 10 shows a further step of the exemplary embodiment of a method according to Fig. 8.

The slave display 200(1) has received the first pulse signal from the master display at its bottom surface. Therefore, the detection information of the slave display 200(1) are "0100". After receiving the first pulse signal, the slave display 200(1) detects that each of its upper, bottom and right edge are in contact with a slave display or the master display 100, i.e. upper edge is in contact with slave display 200(2), bottom edge is in contact with the master display 100, and the right edge is in contact with slave display 200(6). Therefore, the contact information of the slave display 200(1) are "1101". The resulting contact data of the slave display 200(1) are "0100 1101", which includes the detection information "0100" and the contact information "1101". These contact data are transmitted to the master display 100. The master display 100 receives these contact data for the first time, such that the master display 100 sets for the slave display 200(1) with the unique identifier "0000 1101". The unique identifier is transmitted to the slave display 200(1). The predefined order of the slave display 200(1) is "top, bottom, left, right edge". Therefore, a first pulse signal generated by the slave display 200(1) is first transmitted at the top edge to the slave display 200(2). After transmitting the first pulse signal to the slave display 200(2), the slave display 200(1) activates respectively is switched to a waiting mode [W]. In this waiting mode, the slave display 200(1) only responds a second pulse signal when receiving another first pulse signal. The position data of the slave display 200(1) are set/identified by the master display 100 as to be [1;1] and of the master display 100 to [2;1].

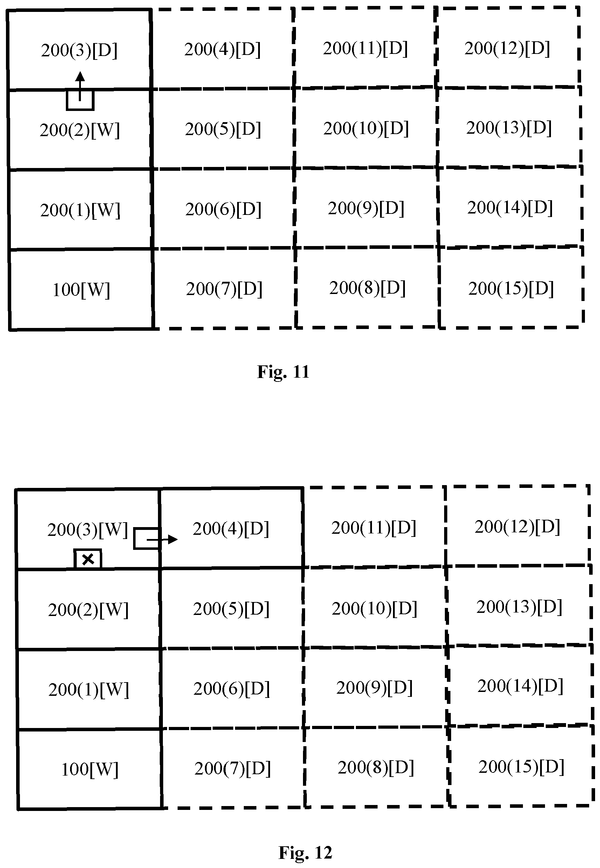

Fig. 11 shows a further step of the exemplary embodiment of a method according to Fig. 8.

The slave display 200(2) has received the first pulse signal from the slave display 200(1) at its bottom surface. Therefore, the detection information of the slave display 200(2) are "0100". After receiving the first pulse signal, the slave display 200(2) detects that each of its upper, bottom and right edge are in contact with a slave display, i.e. upper edge is in contact with slave display 200(3), bottom edge is in contact with the slave display 200(1), and the right edge is in contact with slave display 200(5). Therefore, the contact information of the slave display 200(2) is "1101". The resulting contact data of the slave display 200(2) are "0100 1101". These contact data are transmitted to the master display 100. The master display 100 receives these contact data with the same "0100 1101" for the second time, such that the master display 100 sets for the slave display 200(2) with a unique identifier "0001 1101". The unique identifier is transmitted to the slave display 200(2). The predefined order of the slave display 200(2) is "top, bottom, left, right edge". Therefore, a first pulse signal generated by the slave display 200(2) is first transmitted at the top edge to the slave display 200(3). After transmitting the first pulse signal to the slave display 200(3), the slave display 200(2) activates respectively is switched to a waiting mode [W]. In this waiting mode, the slave display 200(2) only responds a second pulse signal when receiving another first pulse signal. The position data of the slave display 200(2) are set/identified by the master display 100 as to be [1;1], of the slave display 200(1) as to be [2;1], and of the master display 100 as to be [3;1].

Fig. 12 shows a further step of the exemplary embodiment of a method according to Fig. 8.

The slave display 200(3) has received the first pulse signal from the slave display 200(2) at its bottom surface. Therefore, the detection information of the slave display 200(3) are "0100". After receiving the first pulse signal, the slave display 200(3) detects that each of its bottom and right edge are in contact with a slave display, i.e. bottom edge is in contact with the slave display 200(2), and the right edge is in contact with slave display 200(4). Therefore, the contact information of the slave display 200(3) is "0101". The resulting contact data of the slave display 200(3) are "0100 0101". These contact data are transmitted to the master display 100. The master display receives these contact data for the first time, such that the master display 100 sets for the slave display 200(3) with the unique identifier "0000 0101". The unique identifier is transmitted to the slave display 200(3). The predefined order of the slave display 200(3) is "top, bottom, left, right edge". Since, the top edge and the left edge are not in contact with a slave display and the first pulse signal was received by the bottom edge, a first pulse signal generated by the slave display 200(3) is transmitted at the right edge to the slave display 200(4). After transmitting the first pulse signal to the slave display 200(4), the slave display 200(3) activates respectively is switched to a waiting mode [W]. In this waiting mode, the slave display 200(3) only responds a second pulse signal when receiving another first pulse signal. The position data of the slave display 200(3) are set/identified by the master display 100 as to be [1;1], of the slave display 200(2) as to be [2;1], of the slave display 200(1) as to be [3;1], and of the master display 100 as to be [4;1].

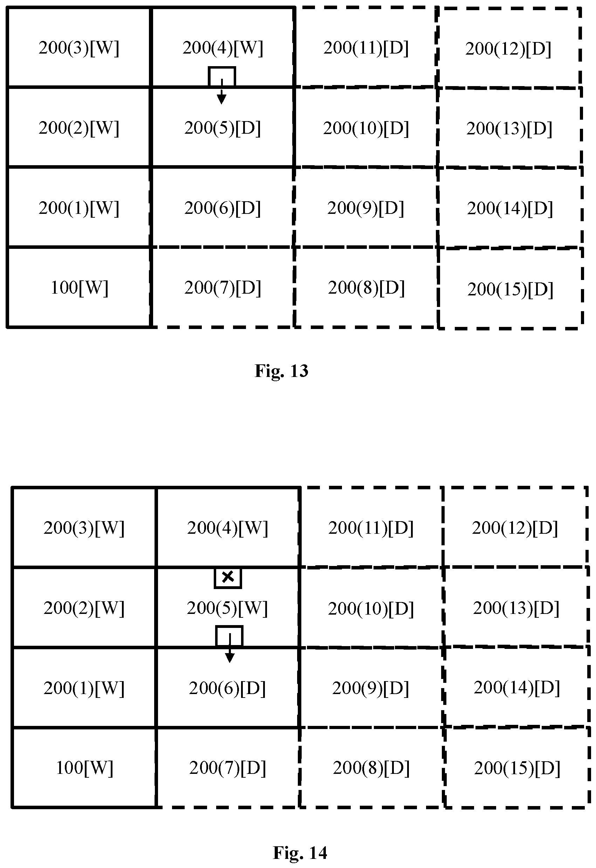

Fig. 13 shows a further step of the exemplary embodiment of a method according to Fig. 8.

The slave display 200(4) has received the first pulse signal from the slave display 200(3) at its right edge. Therefore, the detection information of the slave display 200(4) are "0010". After receiving the first pulse signal, the slave display 200(4) detects that each of its bottom, left, and right edge are in contact with a slave display, i.e. bottom edge is in contact with the slave display 200(5), left edge is in contact with slave display 200(3), and the right edge is in contact with slave display 200(11). Therefore, the contact information of the slave display 200(4) is "0111". The resulting contact data of the slave display 200(4) are "0010 0111". These contact data are transmitted to the master display 100. The master display receives these contact data for the first time, such that the master display 100 sets for the slave display 200(4) with the unique identifier "0000 0111". The unique identifier is transmitted to the slave display 200(4). The predefined order of the slave display 200(4) is "top, bottom, left, right edge". Since, the top edge are not in contact with a slave display, a first pulse signal generated by the slave display 200(4) is transmitted at the bottom edge to the slave display 200(5). After transmitting the first pulse signal to the slave display 200(5), the slave display 200(4) activates respectively is switched to a waiting mode [W]. In this waiting mode, the slave display 200(4) only responds a second pulse signal when receiving another first pulse signal. The position data of the slave display 200(4) are set/identified by the master display 100 as to be [1;2], of the slave display 200(3) as to be [1;1], of the slave display 200(2) as to be [2;1], of the slave display 200(1) as to be [3;1], and of the master display 100 as to be [4;1].

Fig. 14 shows a further step of the exemplary embodiment of a method according to Fig. 8.

The slave display 200(5) has received the first pulse signal from the slave display 200(4) at its upper edge. Therefore, the detection information of the slave display 200(5) are "1000". After receiving the first pulse signal, the slave display 200(5) detects that each of its top, bottom, left, and right edge are in contact with a slave display, i.e. top edge is in contact with slave display 200(4), bottom edge is in contact with the slave display 200(6), left edge is in contact with slave display 200(2), and the right edge is in contact with slave display 200(10). Therefore, the contact information of the slave display 200(5) is "1111". The resulting contact data of the slave display 200(5) are "1000 1111". These contact data are transmitted to the master display 100. The master display receives these contact data for the first time, such that the master display 100 sets for the slave display 200(5) with the unique identifier "0000 1111". The unique identifier is transmitted to the slave display 200(5). The predefined order of the slave display 200(5) is "top, bottom, left, right edge". Since, at the top edge the first pulse signal was initially received, a first pulse signal generated by the slave display 200(5) is transmitted at the bottom edge to the slave display 200(6). After transmitting the first pulse signal to the slave display 200(6), the slave display 200(5) activates respectively is switched to a waiting mode [W]. In this waiting mode, the slave display 200(5) only responds a second pulse signal when receiving another first pulse signal. The position data of the slave display 200(5) are set/identified by the master display 100 as to be [2;2], of the slave display 200(4) as to be [1;2], of the slave display 200(3) as to be [1;1], of the slave display 200(2) as to be [2;1], of the slave display 200(1) as to be [3;1], and of the master display 100 as to be [4;1].

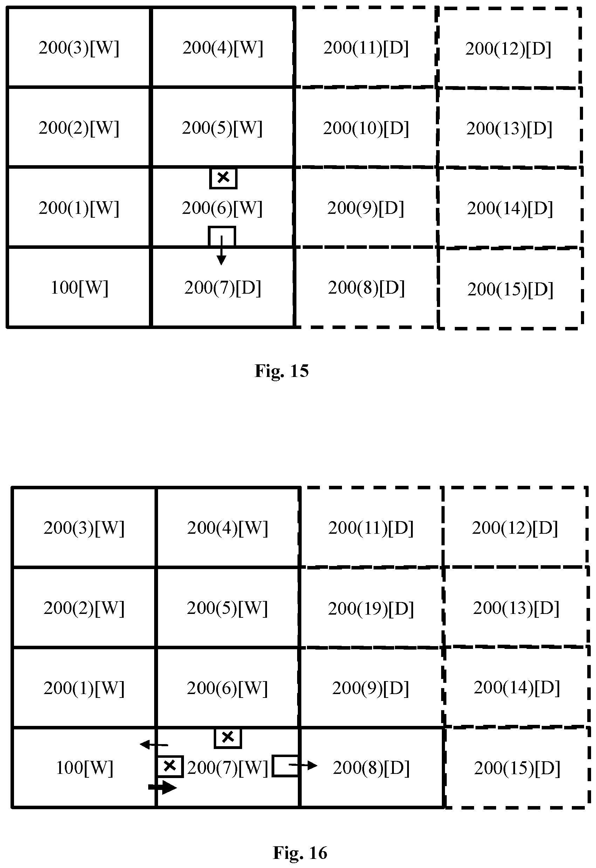

Fig. 15 shows a further step of the exemplary embodiment of a method according to Fig. 8.

The slave display 200(6) has received the first pulse signal from the slave display 200(5) at its upper edge. Therefore, the detection information of the slave display 200(6) are "1000". After receiving the first pulse signal, the slave display 200(6) detects that each of its top, bottom, left, and right edge are in contact with a slave display, i.e. top edge is in contact with slave display 200(5), bottom edge is in contact with the slave display 200(7), left edge is in contact with slave display 200(1), and the right edge is in contact with slave display 200(9). Therefore, the contact information of the slave display 200(6) is "1111". The resulting contact data of the slave display 200(5) are "1000 1111". These contact data are transmitted to the master display 100. The master display receives these contact data for the second time, such that the master display 100 sets for the slave display 200(6) with a unique identifier "0001 1111". The unique identifier is transmitted to the slave display 200(6). The predefined order of the slave display 200(6) is "top, bottom, left, right edge". Since, at the top edge the first pulse signal was initially received, a first pulse signal generated by the slave display 200(6) is transmitted at the bottom edge to the slave display 200(7). After transmitting the first pulse signal to the slave display 200(7), the slave display 200(6) activates respectively is switched to a waiting mode [W]. In this waiting mode, the slave display 200(6) only responds a second pulse signal when receiving another first pulse signal. The position data of the slave display 200(6) are set/identified by the master display 100 as to be [3;2], of the slave display 200(5) as to be [2;2], of the slave display 200(4) as to be [1;2], of the slave display 200(3) as to be [1;1], of the slave display 200(2) as to be [2;1], of the slave display 200(1) as to be [3;1], and of the master display 100 as to be [4;1].

Fig. 16 shows a further step of the exemplary embodiment of a method according to Fig. 8.

The slave display 200(7) has received the first pulse signal from the slave display 200(6) at its upper edge. Therefore, the detection information of the slave display 200(7) are "1000". After receiving the first pulse signal, the slave display 200(7) detects that each of its top, left, and right edge are in contact with a slave display, i.e. top edge is in contact with slave display 200(6), left edge is in contact with the master display 100, and the right edge is in contact with slave display 200(8). Therefore, the contact information of the slave display 200(7) is "1011". The resulting contact data of the slave display 200(7) are "1000 1011". These contact data are transmitted to the master display 100. The master display receives these contact data for the first time, such that the master display 100 sets for the slave display 200(7) the unique identifier "0000 1011". The unique identifier is transmitted to the slave display 200(7). The predefined order of the slave display 200(7) is "top, bottom, left, right edge". At the top edge the first pulse signal was initially received and at the bottom edge no contact was identified. Therefore, a first pulse signal generated by the slave display 200(7) is transmitted at the left edge to the master display 100. Since, the master display 100 is in waiting mode [W], the master display 100 transmits a second pulse signal to the slave display 200(7). Thus, the first pulse signal generated by the slave display 200(7) is transmitted at the right edge to the slave display 200(8). After transmitting the first pulse signal to the slave display 200(8), the slave display 200(7) activates respectively is switched to a waiting mode [W]. In this waiting mode, the slave display 200(7) only responds a second pulse signal when receiving another first pulse signal. The position data of the slave display 200(7) are set/identified by the master display 100 as to be [4;2], of the slave display 200(6) as to be [3;2], of the slave display 200(5) as to be [2;2], of the slave display 200(4) as to be [1;2], of the slave display 200(3) as to be [1;1], of the slave display 200(2) as to be [2;1], of the slave display 200(1) as to be [3;1], and of the master display 100 as to be [4;1].

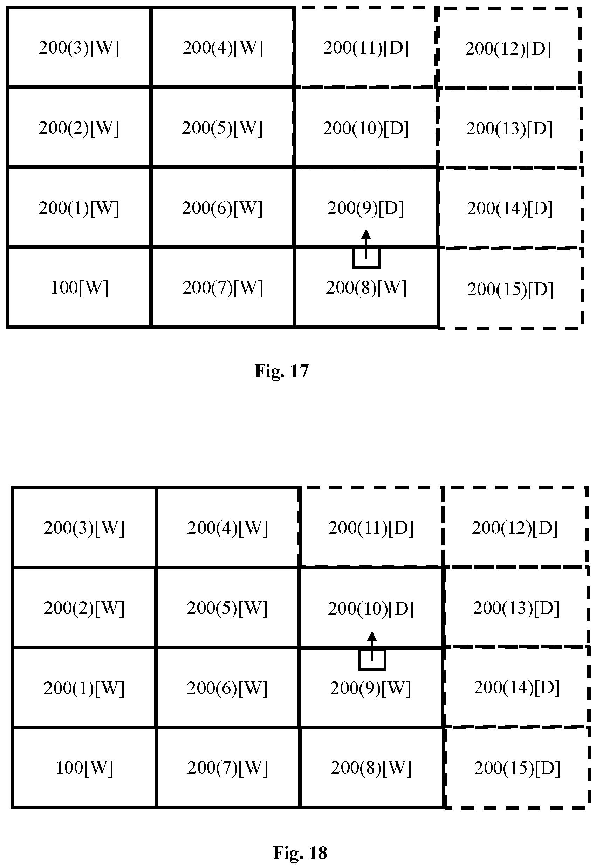

Fig. 17 shows a further step of the exemplary embodiment of a method according to Fig. 8.

The slave display 200(8) has received the first pulse signal from the slave display 200(7) at its left edge. Therefore, the detection information of the slave display 200(8) are "0010". After receiving the first pulse signal, the slave display 200(8) detects that each of its top, left, and right edge are in contact with a slave display, i.e. top edge is in contact with slave display 200(9), left edge is in contact with the slave display 200(7), and the right edge is in contact with slave display 200(15). Therefore, the contact information of the slave display 200(8) is "1011". The resulting contact data of the slave display 200(8) are "0010 1011". These contact data are transmitted to the master display 100. The master display receives these contact data for the second time, such that the master display 100 sets for the slave display 200(8) with a unique identifier "0001 1011". The unique identifier is transmitted to the slave display 200(8). The predefined order of the slave display 200(8) is "top, bottom, left, right edge". A first pulse signal generated by the slave display 200(8) is transmitted at the top edge to the slave display 200(9). After transmitting the first pulse signal to the slave display 200(9), the slave display 200(8) activates respectively is switched to a waiting mode [W]. In this waiting mode, the slave display 200(8) only responds a second pulse signal when receiving another first pulse signal. The position data of the slave display 200(8) are set/identified by the master display 100 as to be [4;3], of the slave display 200(7) as to be [4;2], of the slave display 200(6) as to be [3;2], of the slave display 200(5) as to be [2;2], of the slave display 200(4) as to be [1;2], of the slave display 200(3) as to be [1;1], of the slave display 200(2) as to be [2;1], of the slave display 200(1) as to be [3;1], and of the master display 100 as to be [4;1].

Fig. 18 shows a further step of the exemplary embodiment of a method according to Fig. 8.

The slave display 200(9) has received the first pulse signal from the slave display 200(8) at its bottom edge. Therefore, the detection information of the slave display 200(9) are "0100". After receiving the first pulse signal, the slave display 200(9) detects that each of its top, bottom, left, and right edge are in contact with a slave display, i.e. top edge is in contact with slave display 200(10), bottom edge is in contact with slave display 200(8), left edge is in contact with the slave display 200(6), and the right edge is in contact with slave display 200(14). Therefore, the contact information of the slave display 200(9) is "1111". The resulting contact data of the slave display 200(9) are "0100 1111". These contact data are transmitted to the master display 100. The master display receives these contact data for the third time, such that the master display 100 sets for the slave display 200(9) with the unique identifier "0010 1111". The unique identifier is transmitted to the slave display 200(9). The predefined order of the slave display 200(9) is "top, bottom, left, right edge". A first pulse signal generated by the slave display 200(9) is transmitted at the top edge to the slave display 200(10). After transmitting the first pulse signal to the slave display 200(10), the slave display 200(9) activates respectively is switched to a waiting mode [W]. In this waiting mode, the slave display 200(9) only responds a second pulse signal when receiving another first pulse signal. The position data of the slave display 200(9) are set/identified by the master display 100 as to be [3;3], of the slave display 200(8) as to be [4;3], of the slave display 200(7) as to be [4;2], of the slave display 200(6) as to be [3;2], of the slave display 200(5) as to be [2;2], of the slave display 200(4) as to be [1;2], of the slave display 200(3) as to be [1;1], of the slave display 200(2) as to be [2;1], of the slave display 200(1) as to be [3;1], and of the master display 100 as to be [4;1].

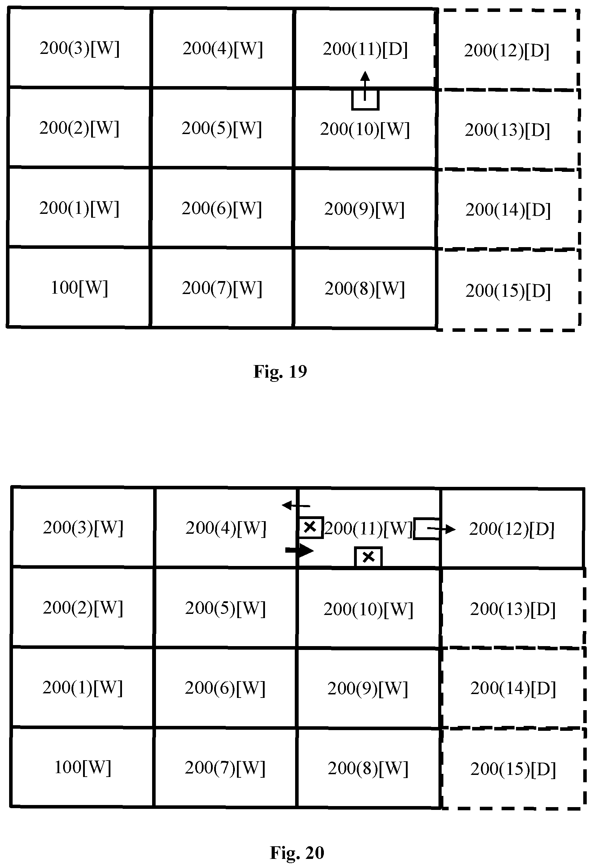

Fig. 19 shows a further step of the exemplary embodiment of a method according to Fig. 8.

The slave display 200(10) has received the first pulse signal from the slave display 200(9) at its bottom edge. Therefore, the detection information of the slave display 200(10) are "0100". After receiving the first pulse signal, the slave display 200(10) detects that each of its top, bottom, left, and right edge are in contact with a slave display, i.e. top edge is in contact with slave display 200(11), bottom edge is in contact with slave display 200(9), left edge is in contact with the slave display 200(5), and the right edge is in contact with slave display 200(13). Therefore, the contact information of the slave display 200(10) is "1111". The resulting contact data of the slave display 200(10) are "0100 1111". These contact data are transmitted to the master display 100. The master display receives these contact data for the fourth time, such that the master display 100 sets for the slave display 200(10) with the unique identifier "0011 1111". The unique identifier is transmitted to the slave display 200(10). The predefined order of the slave display 200(10) is "top, bottom, left, right edge". A first pulse signal generated by the slave display 200(10) is transmitted at the top edge to the slave display 200(11). After transmitting the first pulse signal to the slave display 200(11), the slave display 200(10) activates respectively is switched to a waiting mode [W]. In this waiting mode, the slave display 200(10) only responds a second pulse signal when receiving another first pulse signal. The position data of the slave display 200(10) are set/identified by the master display 100 as to be [2;3], of the slave display 200(9) as to be [3;3], of the slave display 200(8) as to be [4;3], of the slave display 200(7) as to be [4;2], of the slave display 200(6) as to be [3;2], of the slave display 200(5) as to be [2;2], of the slave display 200(4) as to be [1;2], of the slave display 200(3) as to be [1;1], of the slave display 200(2) as to be [2;1], of the slave display 200(1) as to be [3; 1], and of the master display 100 as to be [4;1].

Fig. 20 shows a further step of the exemplary embodiment of a method according to Fig. 8.

The slave display 200(11) has received the first pulse signal from the slave display 200(10) at its bottom edge. Therefore, the detection information of the slave display 200(11) are "0100". After receiving the first pulse signal, the slave display 200(11) detects that each of its bottom, left, and right edge are in contact with a slave display, i.e. bottom edge is in contact with slave display 200(10), left edge is in contact with the slave display 200(4), and the right edge is in contact with slave display 200(12). Therefore, the contact information of the slave display 200(11) is "0111". The resulting contact data of the slave display 200(11) are "0100 0111". These contact data are transmitted to the master display 100. The master display receives these contact data for the second time, such that the master display 100 sets for the slave display 200(11) with the unique identifier "0001 0111". The unique identifier is transmitted to the slave display 200(11). The predefined order of the slave display 200(11) is "top, bottom, left, right edge". At the top edge no contact was identified and the first pulse signal was initially received at the bottom edge. Therefore, a first pulse signal generated by the slave display 200(11) is transmitted at the left edge to the slave display 200(4). Since, the slave display 200(4) is in waiting mode [W], the slave display 200(4) transmits a second pulse signal to the slave display 200(11). Thus, the first pulse signal generated by the slave display 200(11) is transmitted at the right edge to the slave display 200(12). After transmitting the first pulse signal to the slave display 200(12), the slave display 200(11) activates respectively is switched to a waiting mode [W]. In this waiting mode, the slave display 200(11) only responds a second pulse signal when receiving another first pulse signal. The position data of the slave display 200(11) are set/identified by the master display 100 as to be [1;3], of the slave display 200(10) as to be [2;3], of the slave display 200(9) as to be [3;3], of the slave display 200(8) as to be [4;3], of the slave display 200(7) as to be [4;2], of the slave display 200(6) as to be [3;2], of the slave display 200(5) as to be [2;2], of the slave display 200(4) as to be [1;2], of the slave display 200(3) as to be [1;1], of the slave display 200(2) as to be [2;1], of the slave display 200(1) as to be [3;1], and of the master display 100 as to be [4;1].

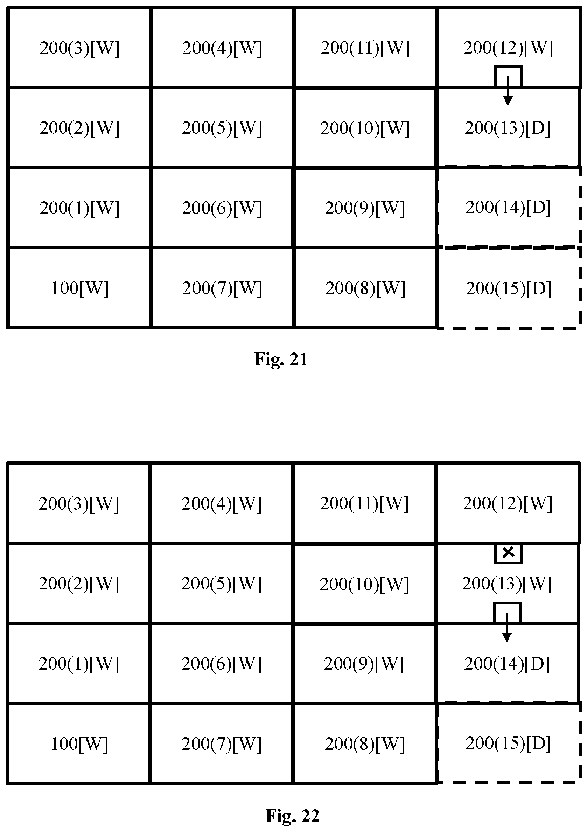

Fig. 21 shows a further step of the exemplary embodiment of a method according to Fig. 8.

The slave display 200(12) has received the first pulse signal from the slave display 200(11) at its left edge. Therefore, the detection information of the slave display 200(12) are "0010". After receiving the first pulse signal, the slave display 200(12) detects that each of its bottom and left edge are in contact with a slave display, i.e. bottom edge is in contact with slave display 200(13) and the left edge is in contact with slave display 200(11). Therefore, the contact information of the slave display 200(12) is "0110". The resulting contact data of the slave display 200(13) are "0010 0110". These contact data are transmitted to the master display 100. The master display receives these contact data for the first time, such that the master display 100 sets for the slave display 200(12) with a unique identifier "0000 0110". The unique identifier is transmitted to the slave display 200(12). The predefined order of the slave display 200(12) is "top, bottom, left, right edge". Since no contact was identified at the top edge, the first pulse signal generated by the slave display 200(12) is transmitted at the bottom edge to the slave display 200(13). After transmitting the first pulse signal to the slave display 200(13), the slave display 200(12) activates respectively is switched to a waiting mode [W]. In this waiting mode, the slave display 200(12) only responds a second pulse signal when receiving another first pulse signal. The position data of the slave display 200(12) are set/identified by the master display 100 as to be [1;4], of the slave display 200(11) as to be [1;3], of the slave display 200(10) as to be [2;3], of the slave display 200(9) as to be [3;3], of the slave display 200(8) as to be [4;3], of the slave display 200(7) as to be [4;2], of the slave display 200(6) as to be [3;2], of the slave display 200(5) as to be [2;2], of the slave display 200(4) as to be [1;2], of the slave display 200(3) as to be [1;1], of the slave display 200(2) as to be [2;1], of the slave display 200(1) as to be [3;1], and of the master display 100 as to be [4;1].

Fig. 22 shows a further step of the exemplary embodiment of a method according to Fig. 8.

The slave display 200(13) has received the first pulse signal from the slave display 200(12) at its top edge. Therefore, the detection information of the slave display 200(13) are "1000". After receiving the first pulse signal, the slave display 200(13) detects that each of its top, bottom, and left edge are in contact with a slave display, i.e. top edge is in contact with slave display 200(12), bottom edge is in contact with slave display 200(14) and the left edge is in contact with slave display 200(10). Therefore, the contact information of the slave display 200(13) is "1110". The resulting contact data of the slave display 200(13) are "1000 1110". These contact data are transmitted to the master display 100. The master display receives these contact data for the first time, such that the master display 100 sets for the slave display 200(13) with the unique identifier "0000 1110". The unique identifier is transmitted to the slave display 200(13). The predefined order of the slave display 200(13) is "top, bottom, left, right edge". Since the initial first pulse signal was received at the top edge, the first pulse signal generated by the slave display 200(13) is transmitted at the bottom edge to the slave display 200(14). After transmitting the first pulse signal to the slave display 200(14), the slave display 200(13) activates respectively is switched to a waiting mode [W]. In this waiting mode, the slave display 200(13) only responds a second pulse signal when receiving another first pulse signal. The position data of the slave display 200(13) are set/identified by the master display 100 as to be [2;4], of the slave display 200(12) as to be [1;4], of the slave display 200(11) as to be [1;3], of the slave display 200(10) as to be [2;3], of the slave display 200(9) as to be [3;3], of the slave display 200(8) as to be [4;3], of the slave display 200(7) as to be [4;2], of the slave display 200(6) as to be [3;2], of the slave display 200(5) as to be [2;2], of the slave display 200(4) as to be [1;2], of the slave display 200(3) as to be [1;1], of the slave display 200(2) as to be [2;1], of the slave display 200(1) as to be [3;1], and of the master display 100 as to be [4;1].

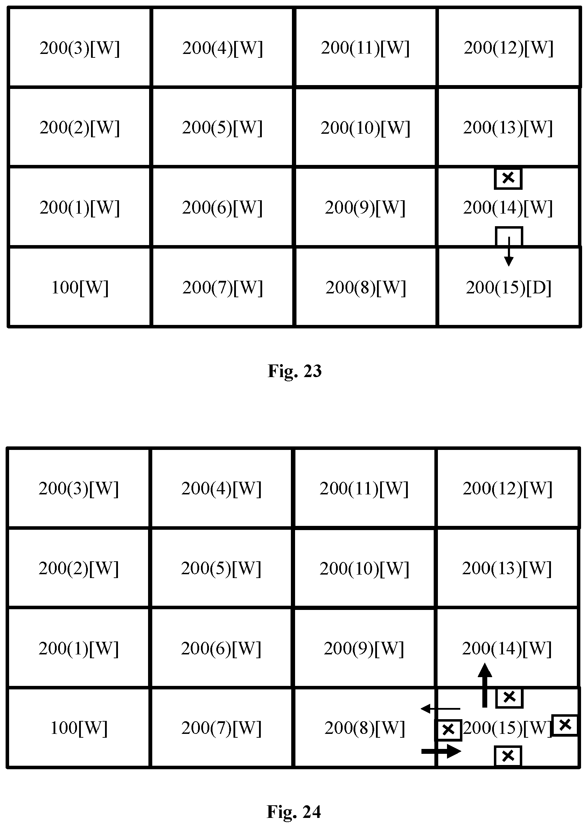

Fig. 23 shows a further step of the exemplary embodiment of a method according to Fig. 8.

The slave display 200(14) has received the first pulse signal from the slave display 200(13) at its top edge. Therefore, the detection information of the slave display 200(14) are "1000". After receiving the first pulse signal, the slave display 200(14) detects that each of its top, bottom, and left edge are in contact with a slave display, i.e. top edge is in contact with slave display 200(13), bottom edge is in contact with slave display 200(15) and the left edge is in contact with slave display 200(9). Therefore, the contact information of the slave display 200(14) is "1110". The resulting contact data of the slave display 200(14) are "1000 1110". These contact data are transmitted to the master display 100. The master display receives these contact data for the second time, such that the master display 100 sets for the slave display 200(14) with the unique identifier "0001 1110". The unique identifier is transmitted to the slave display 200(14). The predefined order of the slave display 200(14) is "top, bottom, left, right edge". Since the initial first pulse signal was received at the top edge, the first pulse signal generated by the slave display 200(14) is transmitted at the bottom edge to the slave display 200(15). After transmitting the first pulse signal to the slave display 200(15), the slave display 200(14) activates respectively is switched to a waiting mode [W]. In this waiting mode, the slave display 200(14) only responds a second pulse signal when receiving another first pulse signal. The position data of the slave display 200(14) are set/identified by the master display 100 as to be [3;4], of the slave display 200(13) as to be [2;4], of the slave display 200(12) as to be [1;4], of the slave display 200(11) as to be [1;3], of the slave display 200(10) as to be [2;3], of the slave display 200(9) as to be [3;3], of the slave display 200(8) as to be [4;3], of the slave display 200(7) as to be [4;2], of the slave display 200(6) as to be [3;2], of the slave display 200(5) as to be [2;2], of the slave display 200(4) as to be [1;2], of the slave display 200(3) as to be [1;1], of the slave display 200(2) as to be [2;1], of the slave display 200(1) as to be [3;1], and of the master display 100 as to be [4;1].

Fig. 24 shows a further step of the exemplary embodiment of a method according to Fig. 8.

The slave display 200(15) has received the first pulse signal from the slave display 200(14) at its top edge. Therefore, the detection information of the slave display 200(15) are "1000". After receiving the first pulse signal, the slave display 200(15) detects that each of its top and left edge are in contact with a slave display, i.e. top edge is in contact with slave display 200(14) and the left edge is in contact with slave display 200(8). Therefore, the contact information of the slave display 200(15) is "1010". The resulting contact data of the slave display 200(15) are "1000 1010". These contact data are transmitted to the master display 100. The master display receives these contact data for the first time, such that the master display 100 sets for the slave display 200(15) with the unique identifier "0000 1010". The unique identifier is transmitted to the slave display 200(15). The predefined order of the slave display 200(15) is "top, bottom, left, right edge". Since the initial first pulse signal was received at the top edge and the bottom and right edge are not in contact with another slave display, the first pulse signal generated by the slave display 200(14) is transmitted at the left edge to the slave display 200(8). Since, the slave display 200(8) is in waiting mode [W], the slave display 200(8) transmits a second pulse signal to the slave display 200(15). Thus, since the slave display 200(15) only receives second pulse signals when transmitting first pulse signals to adjacent displays, the slave display 200(15) generates an own second pulse signal and transmits this own second pulse signal to the slave display 200(14), i.e. to the slave display from which the initially first pulse signal was received. Additionally, slave display 200(15) generates a complete message and transmits this complete message to the master display 100. After transmitting the second pulse signal to the slave display 200(14), the slave display 200(15) activates respectively is switched to a waiting mode [W]. In this waiting mode, the slave display 200(15) only responds a second pulse signal when receiving another first pulse signal. The position data of the slave display 200(15) are set/identified by the master display 100 as to be [4;4], of the slave display 200(14) as to be [3;4], of the slave display 200(13) as to be [2;4], of the slave display 200(12) as to be [1;4], of the slave display 200(11) as to be [1;3], of the slave display 200(10) as to be [2;3], of the slave display 200(9) as to be [3;3], of the slave display 200(8) as to be [4;3], of the slave display 200(7) as to be [4;2], of the slave display 200(6) as to be [3;2], of the slave display 200(5) as to be [2;2], of the slave display 200(4) as to be [1;2], of the slave display 200(3) as to be [1;1], of the slave display 200(2) as to be [2;1], of the slave display 200(1) as to be [3;1], and of the master display 100 as to be [4; 1].

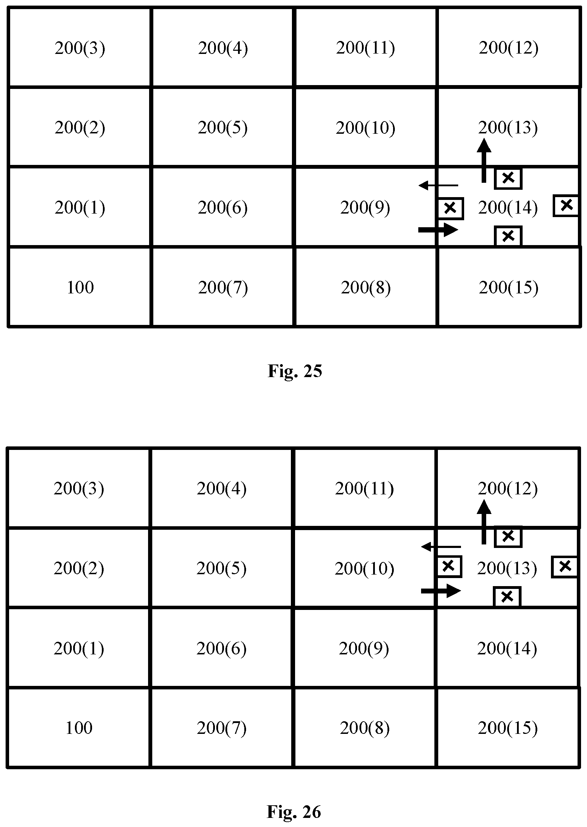

Fig. 25 shows a further step of the exemplary embodiment of a method according to Fig. 8.

The slave display 200(14) has received the second pulse signal from the slave display 200(15) at the bottom edge. The predefined order of the slave display 200(14) is "top, bottom, left, right edge". Since the initial first pulse signal was received at the top edge, the second pulse was received at the bottom edge, and no contact was identified/determined at the right edge, the first pulse signal generated by the slave display 200(14) is transmitted at the left edge to the slave display 200(9). The slave display 200(9) is in waiting mode [W], such that the slave display 200(9) transmits a second pulse signal to the slave display 200(14). Thus, since the slave display 200(14) only receives second pulse signals when transmitting first pulse signals to adjacent displays, the slave display 200(14) generates an own second pulse signal and transmits this own second pulse signal to the slave display 200(13), i.e. to the slave display from which the initially first pulse signal was received. Additionally, slave display 200(14) generates a complete message and transmits this complete message to the master display 100.

Figs. 26 to 38 show further steps of the exemplary embodiment of a method according to Fig. 8. In these figures, the slave displays only receive second pulse signals from the slave displays, i.e. slave displays being in contact and being not the slave display providing the initially first pulse signal or the second pulse signal, such that each one of the slave displays 200 generate an own second pulse signal and transmits this own second pulse signal to the slave display from which the initially first pulse signal was received. Additionally, each one of the slave displays 200(14) generate a complete message and transmits this complete message to the master display 100.

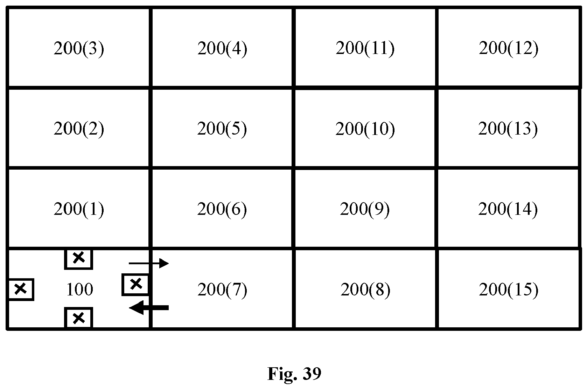

Fig. 39 shows a further step of the exemplary embodiment of a method according to Fig. 8.

The master display 100 has received the second pulse signal from the slave display 200(1) at the top edge. The predefined order of the master display 100 is "top, bottom, left, right edge". Since the second pulse was received at the top edge and no contact was identified/determined at the left and bottom edge, the first pulse signal generated by the master display 100 is transmitted at the right edge to the master display 100. The slave display 200(7) is in waiting mode [W], such that the slave display 200(7) transmits a second pulse signal to the master display 100. Thus, since the master display 100 only receives second pulse signals when transmitting first pulse signals to adjacent displays, the master display 100 sets the detection mode to finish.

By this proceeding the following position data were determined: slave display 200(15) - [4;4], slave display 200(14) - [3;4], slave display 200(13) - [2;4], slave display 200(12) - [1;4], slave display 200(11) - [1;3], slave display 200(10) - [2;3], slave display 200(9) - [3;3], slave display 200(8) - [4;3], slave display 200(7) - [4;2], slave display 200(6) - [3;2], slave display 200(5) - [2;2], slave display 200(4) - [1;2], slave display 200(3) - [1;1], slave display 200(2) - [2;1], slave display 200(1) - [3;1], and master display 100 - [4;1].

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, to enable people skilled in the art to understand the disclosure for various embodiments and with various modifications as are suited to the particular use or implementation contemplated. Therefore, the term "the disclosure" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow an inquirer to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by people skilled in the art without departing from the scope of the disclosure as defined by the following claims. Moreover, no element and component in the present disclosure is intended to be dedicated to the public regardless of whether the element or component is explicitly recited in the following claims.

### Reference signs

| | | | |
|---|---|---|---|
| 100 | master display | 120b | transceiver |
| 110 | controller | 120c | transceiver |
| 111 | activating message component | 120d | transceiver |
| 112 | contact determination component | 121 | contact identification component |
| 113 | first pulse signal transmission initiation component trigger component | 122 | first pulse signal component |
| | | 123 | second pulse signal component |
| 114 | contact data receiving component | 130 | image data receiving component |
| 115 | unique identifier providing component | 140 | display element |
| 116 | storing component | 150 | image data providing component |
| 117 | second pulse signal receipt initiating component | 160 | user input component |
| | | 200 | slave display |
| 118 | position data providing component | 210 | controller |
| 119 | unique identifier transmitting component | 211 | activating message receiving component |
| 120 | transceiver system | 212 | first pulse signal receipt initiating component |
| 120a | transceiver | | |

| | | | |
|---|---|---|---|
| 213 | first pulse signal storing component | S3 | detecting step |
| 214 | contact determination component | S4 | transmitting step |
| 215 | contact data transmitting component | S5 | receiving step |
| 216 | first pulse signal transmission initiation component | S6 | detecting step |
| | | S7 | providing step |
| 217 | second pulse signal receipt initiating component | S8 | transmitting step |
| | | S9 | receiving step |
| 218 | own second pulse signal transmission initiation component | S10 | assigning step |
| | | S11 | transmitting step |
| 219 | storing component | S12 | activating step |
| 220 | transceiver system | S13 | receiving step |
| 220a | transceiver | S14 | detecting step |
| 220b | transceiver | S15 | providing step |
| 220c | transceiver | S16 | transmitting step |
| 220d | transceiver | S17 | receiving step |
| 221 | contact identification component | S18 | assigning step |
| 222 | first pulse signal component | S20 | activating step |
| 223 | second pulse signal component | S21 | receiving step |
| 224 | own second pulse signal component | S22 | providing step |
| 230 | image data receiving component | S27 | transmitting step |
| 240 | display element | S24 | providing step |
| 250 | image data providing component | S25 | transmitting step |
| 400 | large screen display | S26 | receiving step |
| S1 | transmitting step | S27 | generating step |
| S2 | activating step | S28 | setting step |

## Claims

1. A master display (100) for a large screen display (400), comprising:
a controller (110),
a transceiver system (120) communicatively coupled with the controller (110), wherein the controller (110) is configured:
to transmit an activating message to all slave displays (200) being communicatively coupled to the master display (100) to activate a detection mode,
to determine at least one adjacent slave display(s) (200) of the master display (100) by using the transceiver system (120),
to initiate a transmission of a first pulse signal to the at least one adjacent slave display(s) (200) of the master display (100) by using the transceiver system (120) based on predefined order of edges of the master display (100);
to receive contact data from the at least one slave display(s) (200),
to assign a unique identifier to the at least one slave display(s) (200);
to initiate a receipt of a second pulse signal by using the transceiver system (120), the second pulse signal being different than the first pulse signal;
to generate position data of the all slave display(s) (200) based on the unique identifiers of the slave display(s) (200);
to finish the detection mode.

2. The master display (100) according to claim 1, wherein the transceiver system (120) comprises four transceivers (120a, 120b, 120c, 120d), wherein one of the four transceivers (120a, 120b, 120c, 120d) is arranged at each edge of the master display (100).

3. The master display (100) according to any one of the preceding claims, wherein the contact data transmitted from the at least one slave display(s) (200) comprises contact information indicating contacts of the transceiver system (220) of the slave display (200) and detection information indicating at which edge of the slave display (200) the first pulse signal was received.

4. The master display (100) according to any one of the preceding claims, wherein the controller (120) is further configured to store the unique identifier and/or to transmit the unique identifier to the slave display (200).

5. The master display (100) according to any one of the preceding claims, wherein the first pulse signal is a single pulse signal and the second pulse signal is a multi-pulse signal.

6. The master display (100) according to any one of the preceding claims, wherein the unique identifier fully or partially includes the contact data.

7. The master display (100) according to any one of the preceding claims, wherein the controller (110) comprises:
an activating message component (111) configured for providing at least one activating message(s) and transmitting the at least one activating message(s) to all slave displays (200) being communicatively coupled to the master display (100);
a contact determination component (112) configured for receiving contact information from the transceiver system (120), for determining the adjacent slave displays (200) of the master display (100), and for providing contact data of the master display (100);
a first pulse signal transmission initiation component (113) configured for providing and transmitting the first pulse signal to the at least one adjacent slave display(s) (200) of the master display (100) via the transceiver system (120) or for providing and transmitting a first pulse signal instruction to the transceiver system (120) for initiating a providing and a transmitting of the first pulse signal to the at least one adjacent slave display(s) (200) of the master display (100) by the transceiver system (120);
a contact data receiving component (114) configured for receiving contact data from the at least one slave display(s) (200);
a unique identifier providing component (115) configured for providing the unique identifier based on the received contact data from at least one slave display(s) (200) and/or the master display (100);
a storing component (116) configured for storing the contact data and/or the unique identifier;
a second pulse signal receipt initiating component (117) configured for receiving the second pulse signal via the transceiver system (120) or for receiving second pulse signal information from the transceiver system (120) indicating a receipt of a second pulse signal;
a position data determination component (118) configured for determining the position data of all slave display (s) (200) based on the unique identifiers of the slave display (s) (200).

8. The master display (100) according to any one of the preceding claims, wherein the controller (110) further comprises a unique identifier transmitting component (119) configured for transmitting the unique identifier to the at least one slave display(s) (200).

9. The master display (100) according to any one of the preceding claims, wherein the transceiver system (120) comprises:
a contact identification component (121) configured for identifying adjacent slave displays (200), for providing contact information, and for transmitting the contact information to the controller (110);
a first pulse signal component (122) configured for forwarding a first pulse signal provided by the controller (110) to the at least one adjacent slave display(s) (200) of the master display (100) or for receiving a first pulse signal instruction provided by the controller (110), for generating a first pulse signal, and for transmitting the first pulse signal to the at least one adjacent slave display(s) (200) of the master display (100);
a second pulse signal component (123) configured for receiving and forwarding a second pulse signal to the controller (110) or for receiving a second pulse signal, providing second pulse signal information, and for providing the second pulse signal information to the controller (110).

10. A slave display (200) for a large screen display (400), comprising:
a controller (210),
a transceiver system (220) assigned to at least one edge(s) of the slave display (200), wherein the controller (210) is configured:
to receive an activating message from a master display (100) being communicatively coupled to the slave display (200) to activate a detection mode;
to initiate a receipt of a first pulse signal by using the transceiver system (220);
after receiving the first pulse, to determine the adjacent slave displays (200) by using the transceiver system (220);
to transmit contact data to the master display (100);
to initiate a transmission of a first pulse signal to at least one adjacent slave display(s) (200) by using the transceiver system (220) based on predefined order of the edges of the slave display (200);
to activate a waiting mode of the slave display (200) after having transmitted the contact data to the master display (100),
to initiate a receipt of a second pulse signal being different than the first pulse signal from at least one adjacent slave display(s) (200) by using the transceiver system (220);
when only second pulse signals are received, to initiate a providing of an own second pulse signal being different than the first pulse signal and to initiate a transmission of the own second pulse signal to the master display (100) or slave display (200) from which the first pulse signal was initially received by using the transceiver system (220).

11. The slave display (200) according to claim 10, wherein the transceiver system (220) comprises four transceivers (220a, 220b, 220c, 220d), wherein one of the four transceivers (220a, 220b, 220c, 220d) is arranged at each edge of the slave display (200).

12. The slave display (200) according to any one of the claims 10 or 11, wherein the controller (210) comprises:
an activating message receiving component (211) configured for receiving the at least one activating message(s) from the master display (100);
a first pulse signal receipt initiating component (212) configured for receiving the first pulse signal via the transceiver system (220) or for receiving first pulse signal information from the transceiver system (220) indicating a receipt of a first pulse signal;
a first pulse signal storing component (213) configured for storing detection information indicating the edge at which the first pulse signal was received;
a contact determination component (214) configured for receiving contact information from the transceiver system (220), for determining the adjacent slave displays (200) and/or master display (100) of the slave display (200), and for providing contact data of the slave display (200);
a contact data transmitting component (215) configured for transmitting contact data to the master display (100);
a first pulse signal transmission initiation component (216) configured for providing and transmitting a first pulse signal to the at least one adjacent slave display(s) (200) or the master display (100) of the slave display (200) via the transceiver system (220) or for providing and transmitting a first pulse signal instruction to the transceiver system (220) for initiating a providing and a transmitting of the first pulse signal to the at least one adjacent slave display(s) (200) or the master display (100) of the slave display (200) by the transceiver system (220);
a second pulse signal receipt initiating component (217) configured for receiving the second pulse signal via the transceiver system (220) or for receiving second pulse signal information from the transceiver system (220) indicating a receipt of a second pulse signal;
an own second pulse signal transmission initiation component (218) configured for providing and transmitting an own second pulse signal to the at least one adjacent slave display(s) (200) or the master display (100) of the slave display (200) via the transceiver system (220) or for providing and transmitting an own second pulse signal instruction to the transceiver system (220) for initiating a providing and a transmitting of the own second pulse signal to the master display (100) or slave display (200) from which the first pulse signal was initially received.

13. The slave display (200) according to any one of the claims 10 to 12, wherein the transceiver system (220) comprises:
a contact identification component (221) configured for identifying adjacent slave displays (200) and/or the master display (100), for providing contact information, and for transmitting the contact information to the controller (210);
a first pulse signal component (222) configured for receiving and forwarding a first pulse signal to the controller (210) or for receiving a first pulse signal, providing first pulse signal information, and for providing the first pulse signal information to the controller (210) or configured for forwarding a first pulse signal provided by the controller (210) to the at least one adjacent slave display(s) (200) or master display (100) of the slave display (200) or for receiving a first pulse signal instruction provided by the controller (210), generating a first pulse signal, and transmitting the first pulse signal to the at least one adjacent slave display(s) (200) or master display (100) of the slave display (200);
a second pulse signal component (223) configured for receiving and forwarding a second pulse signal to the controller (210) or for receiving a second pulse signal, providing second pulse signal information, and for providing the second pulse signal information to the controller (210);
an own second pulse signal component (224) configured for forwarding an own second pulse signal provided by the controller (210) to the master display (100) or slave display (200) from which the first pulse signal was initially received or for receiving an own second pulse signal instruction provided by the controller (210), generating an own second pulse signal, and transmitting the own second pulse signal to the master display (100) or slave display (200) from which the first pulse signal was initially received.

14. A large screen display (400) comprising a master display (100) according to any one of the claims 1 to 9 and at least one slave display (200) according to any one of the claims 10 to 13.

15. A method for detecting position data of displays of a large screen display (400), the large screen display (400) comprises a master display (100) and a plurality of slave displays (200) being communicatively coupled to the master display (100), each one of the displays (100, 200) comprises at least one transceiver (120a, 120b, 120c, 120d) assigned to at least one edge of the displays (100, 200), the method comprises the steps of:
transmitting (S 1), by the master display (100), an activating message to the slave displays (200) to activate a detection mode;
detecting (S2), by the master display (100), at least one adjacent slave display(s) (200) of the master display (100);
transmitting (S3), by the master display (100), a first pulse signal via the at least one transceiver (120a, 120b, 120c, 120d) to the at least one adjacent first slave display (200) of the master display (100) based on predefined order of edges;
receiving (S4), by at least one transceiver (220a, 220b, 220c, 220d) of the first slave display (200), the first pulse signal;
after receiving the first pulse by the first slave display (200), detecting (S5) adjacent other slave displays (200) of the first slave display (200) by the first slave display (200);
providing and transmitting (S6) contact data from the first slave display (200) to the master display (100);
receiving (S7), by the master display (100), the contact data from the first slave display (200),
assigning (S8), by the master display (100), a unique identifier to the first slave display (200);
transmitting (S9) a first pulse signal to an adjacent other slave display(s) (200) of the first slave display (200) by sending the first pulse signal based on predefined order of the edges;
after transmitting the first pulse signal by the first slave display (200), activating (S10), by the first slave display (200), a waiting mode of the first slave display (200);
receiving (S11), by the other slave display (200), a first pulse signal;
after receiving the first pulse by the other slave display (200), detecting (S12), by the other slave display (200), adjacent further slave displays (200) of the other slave display (200);
providing and transmitting (S13) contact data from the other slave display to the master display (100);
receiving (S14), by the master display (100), contact data from the other slave display (200),
assigning (S15), by the master display (100), a unique identifier to the other slave display (200);
transmitting (S16), by the other slave display (200), a first pulse signal to an adjacent further slave display(s) (200) based on predefined order of the edges;
after transmitting the first pulse signal by the other slave display (200), activating (S 17), by the other slave display (200), a waiting mode of the other slave display (200);
receiving (S18), by the other slave display (200), a second pulse signal being different than the first pulse signal from the further adjacent slave display (200);
when the other slave display (200) only receives second pulse signals, providing (S 19) an own second pulse signal being different than the first pulse signal and transmitting the own second pulse signal to the first slave display (200) from which the first pulse signal was received;
when the first slave display (200) only receives second pulse signals, providing (S20) an own second pulse signal being different than the first pulse signal and transmitting the own second pulse signal to the master display (100) from which the first pulse signal was received;
receiving (S21) a second pulse signal, by the master display (100), from the first slave display (200);
generating (S22), by the master display (100), position data of all slave display(s) (200) based on the unique identifiers of the slave display(s) (200); and
setting (S23), by the master display (100), the detection mode to finish.
